# EUROPÄISCHE PATENTSCHRIFT

(11) **EP 3 503 773 B1**
(45) Veröffentlichungstag und Bekanntmachung des Hinweises auf die Patenterteilung: **29.07.2020**
(21) Anmeldenummer: 17755192.6
(22) Anmeldetag: 22.08.2017
(51) Int. Cl.: A47J 37/12

(54) **DURCHLAUF-FRITTIERVORRICHTUNG**
CONTINUOUS DEEP FRYER
DISPOSITIF DE FRITURE EN CONTINU

(30) Priorität: 29.08.2016 DE 102016116011
(43) Veröffentlichungstag der Anmeldung: 03.07.2019
(73) Patentinhaber: Terbuyken, Heiner, 47574 Goch (DE); Langeder, Andreas, 4320 Perg (AT)
(72) Erfinder: Terbuyken, Heiner, 47574 Goch (DE); Langeder, Andreas, 4320 Perg (AT)
(74) Vertreter: Flach Bauer Stahl Patentanwälte Partnerschaft mbB
(86) Internationale Anmeldenummer: PCT/EP2017/071153
(87) Internationale Veröffentlichungsnummer: WO 2018/041676

(56) Entgegenhaltungen:
- WO-A1-87/06811
- GB-A- 640 387
- US-A- 3 576 647
- US-A- 3 695 171

## Beschreibung

Die Erfindung betrifft eine Durchlauf-Frittiervorrichtung zum Frittieren von Frittiergut, insbesondere von Kartoffelchips gemäß dem Oberbegriff des Anspruchs 1.

Insbesondere in der (Groß-)Gastronomie werden eine Vielzahl von Küchengeräten verwendet, die es erlauben, dass eine große Anzahl von Lebensmitteln in kurzer Zeit zubereitet werden können, wobei die einzelnen Produkte am Ende des Verarbeitungsprozesses identisch sein sollen. Derartige Geräte findet man häufig beim Backen bzw. Frittieren. Das Küchenpersonal ist dabei lediglich damit beauftragt, das zu verarbeitende Gut, also die zu verarbeitenden Lebensmittel einzulegen bzw. einzufüllen, um diese anschließend gebacken bzw. frittiert zu entnehmen. Die restlichen Prozessparameter werden durch das Gerät selbst eingestellt, so dass am Ende verarbeitete Lebensmittel entnommen werden können, die in ihrer Beschaffenheit möglichst dauerhaft gleich sind.

Aus der US 2,319,561 A ist eine Frittiervorrichtung bekannt, die eine Frittierwanne umfasst, in die das zu frittierende Frittiergut gegeben wird. Eine Transportvorrichtung transportiert das Frittiergut von einem ersten Bereich in Richtung eines zweiten Bereichs der Frittierwanne, an dem es dann entnommen werden kann. Ein ähnlicher Aufbau einer Frittiervorrichtung ist auch aus der WO 87/06811 A1 bekannt.

Die US 3,270,662 A zeigt eine Kocheinrichtung für Krabben mit einem Kochtopf, wobei dieser Kochtopf eine im Querschnitt U-förmige Form umfasst. Eine Fördereinrichtung dient dazu, dass die Krabben in den Kochtopf eingeführt und nach dem Kochvorgang wieder herausgeholt werden. Diese Fördereinrichtung umfasst Flügel, wobei diese in einer Seite des Kochtopfs nach unten und auf der anderen Seite nach oben verlaufen. Die Fördereinrichtung ist dabei umlaufend angeordnet. Ein ähnlicher Aufbau wird auch in der DE 2 100 810 A gezeigt.

Die US 3,309,981 A zeigt ein Kochgerät für Lebensmittel. Die zu kochenden Lebensmittel werden auf ein umlaufendes Transportband gelegt, welches in eine Kochflüssigkeit eintaucht.

Die DE 600 07 809 T2 beschreibt eine Schneideeinrichtung für Gemüse. Die Schneideeinrichtung umfasst feststehende Messer, die in einem im Querschnitt runden Gehäuse eingebracht sind und um eine Drehachse drehbare Flügel. Die Flügel sind innerhalb des Gehäuses angeordnet. Das zu zerschneidende Gemüse wird durch die Flügel entlang einer Kreisbahn bewegt und aufgrund der Zentrifugalkraft nach außen gedrückt, wo die Messer angeordnet sind, die das Gemüse zerschneiden. Der gesamte Zerschneidevorgang findet in einem kalten Wasserbad statt.

Aus der AT 12 947 U1 ist eine Vorrichtung zum Garen von Lebensmitteln bekannt. Dabei werden die Lebensmittel in einen Behälter, insbesondere in einen Korb gegeben, der in einem Becken um eine im Wesentlichen vertikale Rotationsachse gedreht wird. Sobald der Behälter sich eine gewisse Zeit in dem kreisförmigen Becken befunden hat, sich also um einen bestimmten Winkel gedreht hat, wird dieser mit Hilfe einer Schwenkvorrichtung teilweise aus dem Becken gehoben, wodurch die verarbeiteten Lebensmittel aus dem Korb herausfallen. Dabei können mehrere Körbe nebeneinander in dem kreisförmigen Becken angeordnet sein. Diese drehen sich nacheinander um eine gemeinsame Drehachse.

Nachteilig an der AT 12 947 U1 sind der komplexe Aufbau der Vorrichtung zum Garen von Lebensmitteln und die konstruktionsbedingte große Breite, die verhindern, dass die Vorrichtung an allen Orten eingesetzt werden kann.

Aus der DE 196 29 700 A1 ist eine mobile Frittiervorrichtung bekannt, die ein Fahrgestell und eine beheizbare Frittierwanne umfasst. Über eine Frittiergut-Zuführung wird das Frittiergut zugegeben, wobei das Frittiergut im Anschluss daran auf ein Frittier- und Förderband gelangt, welches innerhalb der Frittierwanne verläuft.

Nachteilig an der DE 196 29 700 A1 ist, dass leichtere Lebensmittel in dem Frittieröl bzw. Frittierfett anfangen zu schwimmen und von dem Frittier- und Förderband nicht mehr in Richtung einer Frittiergut-Austragung transportiert werden können. Nachteilig ist außerdem der erhöhte Reinigungsaufwand, den ein solches Frittier- und Förderband mit sich bringt.

Es ist daher die Aufgabe der hier vorliegenden Erfindung, eine Durchlauf-Frittiervorrichtung zu schaffen, die die eingangs dargestellten Nachteile überwindet. Dabei soll die Durchlauf-Frittiervorrichtung möglichst einfach herstellbar sein und sich insbesondere zum automatischen Frittieren von Kartoffelchips eignen, wobei gleichzeitig sichergestellt sein soll, dass die gesamte Durchlauf-Frittiervorrichtung unter hygienischen Gesichtspunkten möglichst einfach zu reinigen sein soll.

Die Aufgabe wird durch die erfindungsgemäße Durchlauf-Frittiervorrichtung gemäß dem unabhängigen Anspruch 1 gelöst. In den Unteransprüchen sind erfindungsgemäße Weiterbildungen der Durchlauf-Frittiervorrichtung angegeben.

Die erfindungsgemäße Durchlauf-Frittiervorrichtung dient insbesondere zum Frittieren von Kartoffelchips. Sie umfasst eine Frittierwanne, die einen Wannenboden und eine umlaufende Wannenwand aufweist, wodurch ein Frittierraum gebildet ist. Die umlaufende Wannenwand weist zumindest eine erste und eine zweite Seitenwand und zumindest eine erste und eine zweite Stirnwand auf. Vorzugsweise sind die zumindest eine erste und die eine zweite Seitenwand parallel zueinander ausgerichtet und weiter vorzugsweise gleich lang.

Weiterhin ist zumindest eine Heizvorrichtung vorgesehen, die dazu ausgebildet ist, Öl oder Fett innerhalb der Frittierwanne aufzuheizen, wobei der Frittierraum bis zu einer Füllstandshöhe mit Öl oder Fett gefüllt oder befüllbar ist. Außerdem gibt eine Vielzahl von Mitnehmern, die beabstandet zueinander an einer Führungsvorrichtung befestigt sind. Die Führungsvorrichtung ist dabei derart ausgebildet, dass sie die Mitnehmer in einer Umlaufrichtung durch die Frittierwanne bewegt. Die Mitnehmer tauchen dabei im Bereich der ersten Stirnwand in die Frittierwanne ein und werden innerhalb der Frittierwanne auf einer ersten Bewegungsbahn zumindest abschnittsweise von der ersten Stirnwand in Richtung der zweiten Stirnwand bewegt. Die Führungsvorrichtung ist außerdem dazu ausgebildet, die Mitnehmer auf einer zweiten Bewegungsbahn zumindest abschnittsweise von der zweiten Stirnwand in Richtung der ersten Stirnwand oberhalb der Füllstandshöhe zu bewegen. Dies bedeutet, dass die erste Bewegungsbahn überwiegend näher am Wannenboden angeordnet ist als die zweite Bewegungsbahn.

Dadurch, dass die Mitnehmer in das Wannenbad eintauchen, können die zu frittierenden Kartoffelchips mittels der Mitnehmer vom Bereich der ersten Stirnwand in Richtung der zweiten Stirnwand bewegt werden. Die Geschwindigkeit, mit der die Mitnehmer auf ihrer Umlaufbahn bewegt werden, entscheidet neben der Längserstreckung der Frittierwanne zusammen mit der Temperatur des Öls bzw. Fettes darüber, wie stark das Frittiergut, also die Kartoffelchips, frittiert werden. Besonders vorteilhaft ist außerdem, dass sich die ersten bzw. zweite Bewegungsbahn zwischen beiden Stirnwänden erstreckt, so dass die Frittierwanne eine größere Erstreckung in Längsrichtung als quer zur Längsrichtung aufweist, wodurch die Durchlauf-Frittiervorrichtung problemlos in bestehende Kücheneinrichtungen integriert werden kann bzw. auch als Show-Maschine verwendet werden kann, um beispielsweise im Freien Besuchern von Skipisten, Freibädern oder Musikfestivals Kartoffelchips zur Verfügung zu stellen.

Die Durchlauf-Frittiervorrichtung umfasst auch eine Möglichkeit die Kartoffelchips aus ganzen Kartoffeln herstellen zu können. Hierzu umfasst die erfindungsgemäße Durchlauf-Frittiervorrichtung eine Schneidevorrichtung, die zum Schneiden des Frittierguts, also der Kartoffeln dient. Diese Schneidevorrichtung ist im Bereich der ersten Stirnwand oberhalb des Frittierraums angeordnet. Die zumindest eine Schneidevorrichtung umfasst zumindest eine Schneidekante und einen elektrischen Motor, wobei der elektrische Motor in Relation zur Schneidekante auf diese zu oder von dieser wegbewegbar ist. Zwischen der Schneidekante und dem elektrischen Motor ist dadurch ein (variabler) Aufnahmeraum gebildet, in dem das zu zerschneidende Frittiergut, also die Kartoffeln, einbringbar ist. Der elektrische Motor umfasst zumindest ein Befestigungsmittel, das dazu ausgebildet ist, das Frittiergut aufzunehmen und festzuhalten, wodurch dieses vorzugsweise drehgekoppelt an der Welle des elektrischen Motors befestigbar ist. Dies bedeutet, dass durch eine Rotationsbewegung der Welle des elektrischen Motors das Frittiergut ebenfalls in eine Rotationsbewegung versetzt wird, wobei das Frittiergut durch seine Rotation an der zumindest einen Schneidekante geschnitten wird und aufgrund der Schwerkraft in die Frittierwanne fällt. Vorzugsweise wird das Frittiergut in spiralförmige Stücke geschnitten.

Gemäß einer weiteren Ausführungsform der Erfindung ist ein Spalt zwischen dem jeweiligen Mitnehmer und dem Wannenboden und/oder der zweiten Stirnwand und/oder der ersten und/oder der zweiten Seitenwand kleiner als eine durchschnittliche Größe des zu frittierenden Frittierguts. Dadurch ist sichergestellt, dass das Frittiergut durch den jeweiligen Mitnehmer auch durch den Frittierraum bewegt wird und nicht dauerhaft in diesem verbleibt.

Wie bereits erläutert gibt es eine Vielzahl von Mitnehmern. Im Mittel sind in etwa jeweils die Hälfte der Mitnehmer in der Frittierwanne beabstandet zueinander eingetaucht.

Der Mitnehmer ist dabei vorzugsweise so ausgebildet und/oder angeordnet, dass er sich auf zumindest einem Teilbereich der ersten Bewegungsbahn vom Wannenboden bis über die Füllstandshöhe hinaus erstreckt. Dadurch ist sichergestellt, dass der jeweilige Mitnehmer nicht unter dem Frittiergut "hindurchtauchen" kann.

Vorzugsweise verläuft die erste Bewegungsbahn parallel oder mit einer Komponente überwiegend parallel zur zweiten Bewegungsbahn.

Damit das Frittiergut, welches im Bereich der ersten Stirnwand dem Frittierraum zugeführt wird und in Richtung der zweiten Stirnwand bewegt wird, an der zweiten Stirnwand auch leicht entnommen werden kann, verläuft die zweite Stirnwand in einer weiteren Ausführungsform der Erfindung schräg, insbesondere in einem Winkel von mehr als 20° oder mehr als 30° oder mehr als 40° oder mehr als 50° oder mehr als 60° oder mehr als 70°, aber von weniger als 80° oder weniger als 70° oder weniger als 60° oder weniger als 50° oder weniger als 40° oder weniger als 30° zum Wannenboden hin. Der Wannenboden ist vorzugsweise parallel zu einem Untergrund ausgerichtet, auf dem die Durchlauf-Frittiervorrichtung steht. Die Mitnehmer folgen in ihrer ersten Bewegungsbahn zumindest abschnittsweise und vorzugsweise vollständig dem Verlauf der zweiten Stirnwand, wodurch auch Frittiergut, welches vollständig im Öl oder Fett untergetaucht ist, herausgefördert werden kann.

In einer weiteren Ausführungsform der Erfindung verläuft die erste Bewegungsbahn in einem ersten Abschnitt parallel und mit einer Komponente überwiegend parallel zum Wannenboden. Im Anschluss daran verläuft die erste Bewegungsbahn in einem zweiten Abschnitt parallel oder überwiegend parallel zur zweiten Stirnwand. Die zweite Bewegungsbahn verläuft dagegen geneigt zum Wannenboden, wobei ein Abstand zwischen der zweiten Bewegungsbahn und dem Wannenboden in Richtung der ersten Stirnwand abnimmt. Die erste Bewegungsbahn erstreckt sich dabei im ersten Abschnitt vorzugsweise über eine Länge von mehr als 50% bzw. mehr als 65% bzw. mehr als 70% bzw. mehr als 80% der Länge des Wannenbodens. Die erste Bewegungsbahn erstreckt sich in ihrem zweiten Abschnitt ebenfalls über eine Länge von vorzugsweise mehr als 30% bzw. mehr als 40% bzw. mehr als 50% bzw. mehr als 60% bzw. mehr als 70% bzw. mehr als 80% der Länge der zweiten Stirnwand entlang dieser.

In einer weiteren Ausführungsform umfasst der Mitnehmer eine Mitnehmerrückwand, die entlang der ersten Bewegungsbahn senkrecht oder mit einer Komponente überwiegend senkrecht zum Wannenboden und zur ersten oder zweiten Seitenwand verläuft und in den Frittierraum eintaucht. Weiter vorzugsweise umfasst der Mitnehmer eine erste und eine zweite Mitnehmerseitenwand, die parallel oder mit einer Komponente überwiegend parallel zur ersten und/oder zweiten Seitenwand der Frittierwanne ausgerichtet sind. Dabei ist die erste Mitnehmerseitenwand an einer ersten Seite der Mitnehmerrückwand angeordnet und die zweite Mitnehmerseitenwand an einer zweiten Seite der Mitnehmerrückwand, wobei die zweite Seite der ersten Seite gegenüberliegt, wodurch der Mitnehmer in Draufsicht U-förmig gestaltet ist. Der Mitnehmer ist dabei in Richtung des Wannenbodens vorzugsweise überwiegend oder vollständig geöffnet, wobei in Bewegungsrichtung (zum Beispiel in der ersten Bewegungsrichtung) des Mitnehmers die erste und die zweite Mitnehmerseitenwand vor der Mitnehmerrückwand angeordnet sind. Optional können die Ecken bzw. Eckbereiche des Mitnehmers abgerundet sein, damit die Mitnehmerseitenwände einfacher vom Übergang des Wannenbodens zur zweiten Seitenwand gleiten.

In einer weiteren Ausführungsform der Erfindung ist die Mitnehmerrückwand mit Öffnungen durchsetzt, wobei die Öffnungen kleiner sind als das zu frittierende Frittiergut. Die Öffnungen sind allerdings so groß, dass ausreichend Öl bzw. flüssiges Fett durchtreten kann, so dass bei einer Bewegung des Mitnehmers durch den Frittierraum mit keiner bzw. mit nur einer geringen Wellenbildung zu rechnen ist.

Um die Vielzahl der Mitnehmer antreiben zu können, umfasst die Durchlauf-Frittiervorrichtung in einer vorteilhaften Ausführungsform ein erstes umlaufendes Antriebsmittel, bei welchem es sich vorzugsweise um eine Antriebskette oder einen Antriebsrahmen handelt. Die Vielzahl der Mitnehmer ist an diesem umlaufenden ersten Antriebsmittel befestigt.

Vorzugsweise verläuft das erste umlaufende Antriebsmittel in etwa in der Mitte der Frittierwanne entlang einer Längsachse, die sich entlang der Frittierwanne erstreckt, wodurch ein erster Frittierbereich auf einer ersten Seite der Längsachse und ein zweiter Frittierbereich auf einer zweiten Seite der Längsachse gebildet ist. Der erste Frittierbereich erstreckt sich vorzugsweise in der ersten Bewegungsrichtung links von der Längsachse, wohingegen sich der zweite Frittierbereich in der ersten Bewegungsrichtung rechts von der Längsachse erstreckt. Dies hat den Vorteil, dass zwei verschiedene "Linien" von Mitnehmern eingesetzt werden können. In diesem Fall wäre vorzugsweise eine erste Vielzahl von Mitnehmern mit ihren ersten Mitnehmerseitenwänden und/oder mit ihren Mitnehmerrückwänden an dem ersten Antriebsmittel befestigt, wodurch die erste Vielzahl von Mitnehmern in dem ersten Frittierbereich bewegbar ist. Dagegen kann weiterhin eine zweite Vielzahl von Mitnehmern eingesetzt werden, die mit ihrem zweiten Mitnehmerseitenwänden und/oder mit ihren Mitnehmerrückwänden an dem ersten Antriebsmittel befestigt sind, wodurch die zweite Vielzahl von Mitnehmern in dem zweiten Frittierbereich bewegbar ist.

Je nach Größe (also Breite) der Frittierwanne gibt es einen, zwei oder mehr als zwei Frittierbereiche. Dabei sind allerdings die Mitnehmer jeweils gleich groß, so dass nur ein Typ von diesen herzustellen ist. Die Mitnehmer können in das Antriebsmittel eingehängt und/oder mit dem Antriebsmittel verschraubt werden.

Um die Stabilität zu erhöhen, umfasst ein weiteres erfindungsgemäßes Ausführungsbeispiel der Durchlauf-Frittiervorrichtung ein zweites und ein drittes umlaufendes Antriebsmittel, wobei alle Antriebsmittel vorzugsweise parallel zueinander angeordnet sind. Bei diesem zweiten und dritten umlaufenden Antriebsmittel handelt es sich ebenfalls vorzugsweise um eine Antriebskette oder einen Antriebsriemen. Die erste Vielzahl von Mitnehmern ist dabei mit ihren zweiten Mitnehmerseitenwänden und/oder mit ihren Mitnehmerrückwänden an dem zweiten Antriebsmittel befestigt. Die zweite Vielzahl von Mitnehmern ist mit ihren ersten Mitnehmerseitenwänden und/oder mit ihren Mitnehmerrückwänden an dem dritten Antriebsmittel befestigt. Die Befestigung erfolgt gemäß einer der bereits aufgezeigten Möglichkeiten in Zusammenhang mit dem ersten Antriebsmittel.

In einer weiteren Ausführungsform der Erfindung wird jedes Antriebsmittel über ein Antriebsrad angetrieben, wobei das Antriebsrad jedes Antriebsmittels an derselben Antriebswelle angeordnet ist wie je ein Antriebsrad der anderen Antriebsmittel, so dass die Antriebsmittel insgesamt drehgekoppelt sind. Die Führungsvorrichtung umfasst außerdem für jedes Antriebsmittel zumindest ein Laufrad, wobei ein Laufrad jedes Antriebsmittels an derselben Welle angeordnet ist wie je ein Laufrad der anderen Antriebsmittel. Zumindest je ein Laufrad eines Antriebsmittels ist daher mit je einem Laufrad der anderen Antriebsmittel drehgekoppelt.

Es kann auch mehrere Laufräder geben, beispielsweise sind in einer weiteren Ausführungsform der Erfindung erste Laufräder am Übergang vom ersten Abschnitt zum zweiten Abschnitt der ersten Bewegungsbahn angeordnet, wohingegen zweite Laufräder am Übergang der ersten Bewegungsbahn zur zweiten Bewegungsbahn angeordnet sind. Antriebsräder sind dabei im ersten Abschnitt am Übergang der zweiten Bewegungsbahn zur ersten Bewegungsbahn angeordnet. In diesem Fall würde jedes Antriebsmittel über zwei Laufräder und ein Antriebsrad verfügen. Die ersten Laufräder sind in einer unterschiedlichen Höhe hinsichtlich der zweiten Laufräder angeordnet. Dies gilt vorzugsweise auch im Hinblick auf die Antriebsräder. Es könnte allerdings auch sein, dass die Antriebsräder und die ersten Laufräder auf gleicher Höhe angeordnet sind und dass lediglich die zweiten Laufräder weiter vom Wannenboden beabstandet sind als die Antriebsräder. Es können auch mehr als zwei Laufräder pro Antriebsmittel verwendet werden.

Vorzugsweise sind die erste Vielzahl von Mitnehmern und die zweite Vielzahl von Mitnehmern in Umlaufrichtung an unterschiedlichen Stellen an dem ersten Antriebsmittel befestigt und daher versetzt zueinander angeordnet. Dies bedeutet, dass die erste Vielzahl von Mitnehmern hintereinander versetzt zueinander angeordnet sind und dass die zweite Vielzahl von Mitnehmern hintereinander versetzt zueinander angeordnet ist und dass die erste Vielzahl von Mitnehmern auch nebeneinander versetzt zu der zweiten Vielzahl von Mitnehmern angeordnet sind.

Die Antriebsräder sind dabei vorzugsweise im Bereich der ersten Stirnwand angeordnet, wohingegen die Laufräder im Bereich der zweiten Stirnwand bzw. näher an der zweiten Stirnwand als an der ersten Stirnwand angeordnet sind.

Um diesen Schneidevorgang zu erleichtern, ist der elektrische Motor der zumindest einen Schneidevorrichtung in einem weiteren Ausführungsbeispiel an einer Stange oder einer Schiene geführt, wobei das Eigengewicht des elektrischen Motors zusammen mit seiner drehenden Welle dazu führt, dass das Frittiergut an der zumindest einen Schneidekante zerschnitten wird. Der elektrische Motor senkt sich während des Schneidevorgangs selbständig aufgrund seines Eigengewichts in Richtung der Schneidekante ab. Dadurch wird ein stetiger Druck auf das zu zerschneidende Frittiergut ausgeübt, wobei dieses durch den erzeugten Druck während des Schneidevorgangs stets auf die Schneidekante gedrückt wird. Dadurch und durch die Rotation des Frittierguts wird dieses in kürzester Zeit zerschnitten. Die dadurch entstehenden Kartoffelchips fallen direkt in den Frittierraum im Bereich der ersten Stirnwand und können von der Vielzahl der Mitnehmer in Richtung der zweiten Stirnwand transportiert werden.

In einer weiteren Ausführungsform umfasst das Befestigungsmittel des elektrischen Motors eine Befestigungsspitze, die in das Frittiergut einsteckbar ist. Die zumindest eine Schneidevorrichtung umfasst im Bereich der zumindest einen Schneidekante eine Auflagefläche und/oder einen Arretierungsdorn, wobei das Frittiergut zumindest teilweise auf der Auflagefläche aufliegen kann und/oder auf den Arretierungsdorn aufspießbar bzw. aufsteckbar ist. Durch das Befestigungsmittel wird erreicht, dass das Frittiergut drehgekoppelt an der Welle des elektrischen Motors angeordnet ist. Vorzugweise gibt es keinen Schlupf zwischen dem Frittiergut und der Welle des elektrischen Motors. Der Arretierungsdorn und/oder die Auflagefläche dienen außerdem dazu, dass das Frittiergut während des Schneidevorgangs in Position gehalten wird.

In einer weiteren vorteilhaften Ausführungsform der Erfindung gibt es noch zumindest eine weitere Schneidevorrichtung. Diese zumindest eine weitere Vorrichtung ist wie die zumindest eine bereits beschriebene Schneidevorrichtung aufgebaut. Eine solche zumindest eine weitere Schneidevorrichtung gibt es insbesondere dann, wenn es neben einem ersten noch einen zweiten Frittierbereich gibt. In diesem Fall ist die zumindest eine Schneidevorrichtung mit ihrem elektrischen Motor derart angeordnet, dass das von ihr zerschneidbare Frittiergut im Bereich der ersten Stirnwand in den ersten Frittierbereich fällt, wohingegen diese weitere Schneidevorrichtung mit ihrem elektrischen Motor derart angeordnet ist, dass das von ihr zerschneidbare Frittiergut im Bereich der ersten Stirnwand in den zweiten Frittierbereich fällt.

Vorzugsweise ist der Aufnahmeraum, der in der Schneidevorrichtung existiert, zumindest teilweise durch eine Abdeckeinrichtung verschließbar. Der elektrische Motor der zumindest einen Schneidevorrichtung ist in diesem Fall nur dann aktivierbar, wenn die Abdeckeinrichtung den Aufnahmeraum zumindest teilweise verschließt. Dadurch wird verhindert, dass Personen in die Schneidevorrichtung greifen können, wenn diese gerade in Betrieb ist.

Gemäß einer anderen vorteilhaften Ausführungsform umfasst die Durchlauf-Frittiervorrichtung eine Steuervorrichtung, die dazu ausgebildet ist, die Geschwindigkeit der Mitnehmer und die Heizleistung der Heizvorrichtung so zu regeln, dass das Frittiergut an der zweiten Stirnwand einen definierbaren Zustand erreicht.

In einer anderen vorteilhaften Ausführungsform umfasst die Durchlauf-Frittiervorrichtung eine Entnahmestelle, die an der zweiten Stirnwand ausgebildet ist. Die Entnahmestelle umfasst außerdem einen Ablauf für flüssiges Fett oder Öl. Die Mitnehmer sind dabei vorzugsweise derart ausgebildet, dass sie das frittierte Frittiergut zur zweiten Entnahmestelle bewegen.

Schlussendlich umfasst die Durchlauf-Frittiervorrichtung in einer weiteren vorteilhaften Ausführungsform mehrere Rollen, die an der Unterseite eines Rahmens der Durchlauf-Frittiervorrichtung montiert sind, so dass diese verschiebbar ist. Zwischen der Frittierwanne und dem Rahmen befinden sich vorzugsweise noch Staufächer, in denen beispielsweise Verbrauchsmaterial gelagert werden kann.

Verschiedene Ausführungsbeispiele der Erfindung werden nachfolgend unter Bezugnahme auf die Zeichnungen beispielhaft beschrieben. Gleiche Gegenstände weisen dieselben Bezugszeichen auf. Die entsprechenden Figuren der Zeichnungen zeigen im Einzelnen:
- Figuren 1A, 1B:: eine räumliche Darstellung der erfindungsgemäßen Durchlauf-Frittiervorrichtung;
- Figur 2:: eine seitliche und teilweise transparente Darstellung der erfindungsgemäßen Durchlauf-Frittiervorrichtung;
- Figuren 3A, 3B, 4:: verschiedene Ansichten der erfindungsgemäßen Durchlauf-Frittiervorrichtung;
- Figur 5:: eine vergrößerte Darstellung eines Ausschnitts der erfindungsgemäßen Durchlauf-Frittiervorrichtung, die eine Entnahmestelle für das zu frittierte Frittiergut zeigt;
- Figuren 6A bis 6C:: verschiedene Darstellungen der der erfindungsgemäßen Durchlauf-Frittiervorrichtung die unterschiedliche Stellungen der zumindest einen Schneidevorrichtung zeigen; und
- Figuren 7A und 7B:: verschiedene detaillierte Ansichten der zumindest einen Schneidevorrichtung zum Zerschneiden des Frittierguts.

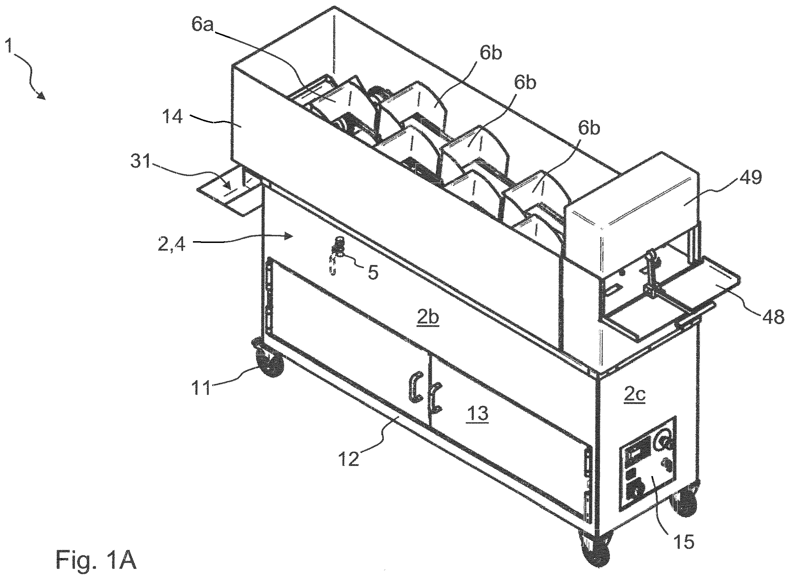

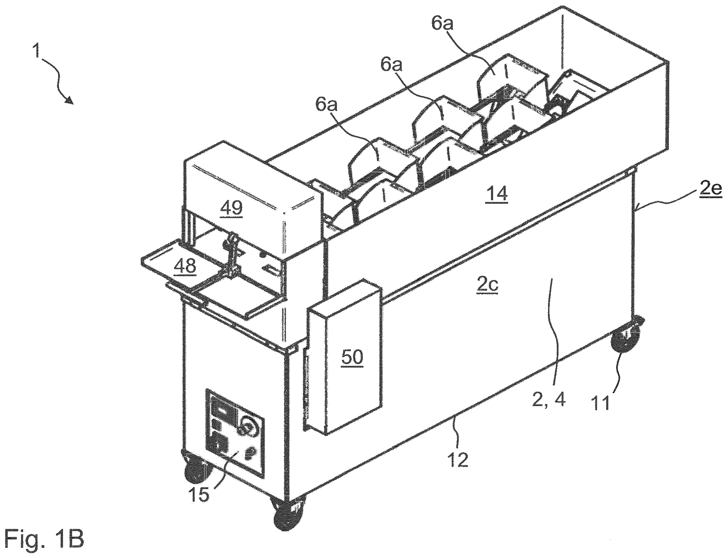

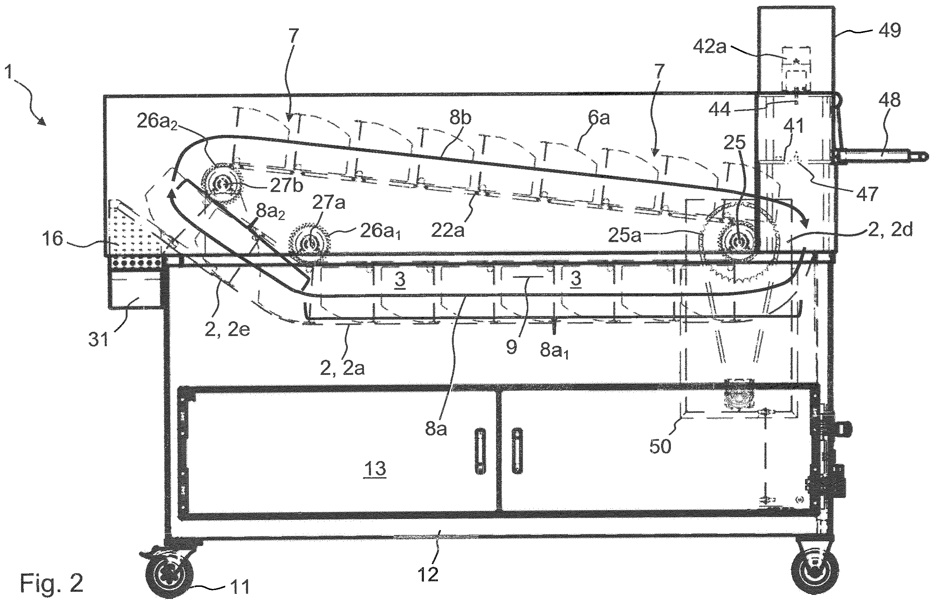

Die Figuren 1A und 1B zeigen eine räumliche Darstellung der erfindungsgemäßen Durchlauf-Frittiervorrichtung 1. Die Durchlauf-Frittiervorrichtung 1 umfasst eine Frittierwanne 2 (siehe Figur 2), die einen Wannenboden 2a und eine umlaufende Wannenwand aufweist, wodurch ein Frittierraum 3 gebildet ist. Die umlaufende Wannenwand umfasst zumindest eine erste und eine zweite Seitenwand 2b, 2c und eine erste und eine zweite Stirnwand 2d, 2e. Im Hinblick auf die Figuren 1A und 1B ist die Frittierwanne 2 mit der umlaufenden Wannenwand lediglich gestrichelt angedeutet. Die Frittierwanne 2 ist vorzugsweise noch durch eine Verkleidung 14 abgedeckt. Zwischen der Verkleidung 4 und der Frittierwanne 2 ist vorzugsweise ein wärmeisolierendes Medium angeordnet, so dass sich die Temperatur der Frittierwanne 2 nicht auf die äußere Verkleidung 4 der Durchlauf-Frittiervorrichtung 1 überträgt. Personen können daher die Verkleidung 4 problemlos berühren. Die Bezugszeichen, die zu der Frittierwanne 2 gehören, sind daher in den räumlichen Darstellungen lediglich ungefähr an der Stelle eingezeichnet, an welcher sich die Frittierwanne 2 befindet, die Aufgrund der Verkleidung 4 nicht zu sehen ist.

In Figur 2 ist eine seitliche und teilweise transparente Darstellung der erfindungsgemäßen Durchlauf-Frittiervorrichtung 1 gezeigt. Dieser Darstellung kann die Lage und Gestaltung der Frittierwanne 2 entnommen werden.

Die Durchlauf-Frittiervorrichtung 1 umfasst außerdem zumindest eine Heizvorrichtung. Die Heizvorrichtung ist dazu ausgebildet, das Frittieröl bzw. Frittierfett innerhalb der Frittierwanne 2 aufzuheizen.

Der Frittierraum 3 der Frittierwanne 2 ist dabei bis zu einer Füllstandshöhe 9 mit diesem Frittieröl bzw. Frittierfett gefüllt oder füllbar. Ein Hahn 5, insbesondere in Form eines Kugelhahns, ist an einer Außenseite der Durchlauf-Frittiervorrichtung 1 vorgesehen. Über diesen Hahn 5 kann das Öl oder Fett der Frittierwanne 2 entleert werden. Der Hahn 5 ist dabei in der Nähe des Wannenbodens 2a angeordnet.

Weiterhin umfasst die Durchlauf-Frittiervorrichtung 1 eine Vielzahl von Mitnehmern 6a, 6b, die beabstandet zueinander an einer Führungsvorrichtung 7 befestigt sind. Die Führungsvorrichtung 7 ist dazu ausgebildet, dass sie die Mitnehmer 6a, 6b in einer Umlaufrichtung durch die Frittierwanne 2 bewegt. Die Mitnehmer 6a, 6b tauchen im Bereich der ersten Stirnwand 2d in die Frittierwanne 2 ein. Innerhalb der Frittierwanne 2 sind sie durch die Führungsvorrichtung 7 auf einer ersten Bewegungsbahn 8a zumindest abschnittsweise von der ersten Stirnwand 2d in Richtung der zweiten Stirnwand 2e bewegbar.

Weiterhin sind die Mitnehmer 6a, 6b durch die Führungsvorrichtung 7 auf einer zweiten Bewegungsbahn 8b zumindest abschnittsweise von der zweiten Stirnwand 2e in Richtung der ersten Stirnwand 2d bewegbar. Die zweite Bewegungsbahn 8b erfolgt vorzugsweise oberhalb der Füllstandshöhe 9, wohingegen die ersten Bewegungsbahn 8a vorzugsweise unterhalb bzw. überwiegend unterhalb der Füllstandshöhe 9 angeordnet ist. Im Hinblick auf Figur 2 bedeutet dies, dass die Mitnehmer 6a, 6b in der zweiten Bewegungsbahn 8b, im Gegensatz zur ersten Bewegungsbahn 8a, nicht in das Öl bzw. Fett eintauchen.

Die erste Bewegungsbahn 8a kann parallel oder mit einer Komponente überwiegend parallel zur zweiten Bewegungsbahn 8b verlaufen. Vorzugsweise ist allerdings die zweite Bewegungsbahn 8b gegenüber der ersten Bewegungsbahn 8a geneigt, wie dies auch in Figur 2 dargestellt ist. Die erste Bewegungsbahn 8a verläuft vorzugsweise in einem ersten Abschnitt 8a₁ parallel oder mit einer Komponente überwiegend parallel zum Wannenboden 2a. Weiterhin verläuft die erste Bewegungsbahn 8a in einem zweiten Abschnitt 8a₂ parallel oder mit einer Komponente überwiegend parallel zur zweiten Stirnwand 2e. Die zweite Stirnwand 2e verläuft schräg, insbesondere in einem Winkel von mehr als 20° oder mehr als 30° oder mehr als 40° oder mehr als 50° oder mehr als 60° oder mehr als 70°, aber vorzugsweise von weniger als 80° oder weniger als 70° oder weniger als 60° oder weniger als 50° oder weniger als 40° oder weniger als 30° zum Wannenboden 2a.

Die zweite Bewegungsbahn 8b verläuft dagegen geneigt zum Wannenboden 2a, wobei ein Abstand zwischen der zweiten Bewegungsbahn 8b und dem Wannenboden 2a in Richtung der ersten Stirnwand 2d abnimmt.

Die Mitnehmer 6a, 6b sind so ausgebildet und/oder angeordnet, dass sie sich auf zumindest einen Teilbereich der ersten Bewegungsbahn 8a vom Wannenboden 2a bis über die Füllstandshöhe 9 hinaus erstrecken. Dadurch wird erreicht, dass das Frittiergut 10 zuverlässig von der ersten Stirnwand 2d zur zweiten Stirnwand 2e transportiert wird.

Vorzugsweise ist außerdem ein Spalt zwischen den Mitnehmern 6a, 6b und dem Wannenboden 2a und/oder der zweiten Stirnwand 2e und/oder der ersten und/oder der zweiten Seitenwand 2b, 2c kleiner als das durchschnittliche zu frittierende Frittiergut 10. Ein solcher Spalt verhindert, dass sich die Mitnehmer 6a, 6b an der Frittierwanne 2 abarbeiten. Der Spalt ist vorzugsweise kleiner als 2 cm, weiter vorzugsweise kleiner als 1 cm.

Die Durchlauf-Frittiervorrichtung 1 umfasst außerdem mehrere Rollen 11, die an der Unterseite eines Rahmens 12 montiert sind, wodurch die Durchlauf-Frittiervorrichtung 1 verschiebbar ist. Zwischen der Frittierwanne 2 und dem Rahmen 12 befinden sich vorzugsweise noch Staufächer 13.

An der Oberseite der Frittierwanne 2 befindet sich vorzugsweise noch eine Abdeckung 14. Die Abdeckung 14 ist vorzugsweise durchsichtig und erstreckt sich oberhalb der ersten und der zweiten Seitenwand 2b, 2c und der zweiten Stirnwand 2e der Frittierwanne 2. Im einfachsten Fall kann es sich bei der Abdeckung 14 um Glas handeln. Die Mitnehmer 6a, 6b verlaufen vorzugsweise unterhalb einer Oberkante der Abdeckung 14.

Weiterhin ist noch eine Steuervorrichtung 15 vorgesehen, die dazu ausgebildet ist, die Geschwindigkeit der Mitnehmer 6a, 6b und die Heizleistung der Heizvorrichtung so zu regeln, dass das Frittiergut 10 an der zweiten Stirnwand 2e einen definierbaren Zustand erreicht. Die Steuerungsvorrichtung umfasst unter anderem noch einen Not-Aus-Taster, einen Maschinenhauptschalter und beispielsweise die Maschinensteuerung inklusive einer Temperaturanzeige.

Die Vielzahl der Mitnehmer 6a, 6b werden vorzugsweise über einen nicht dargestellten (Elektro-)Motor angetrieben. Dieser Elektromotor ist vorzugsweise unterhalb der Frittierwanne 2 angeordnet. In Figur 1B ist ein Antriebsgehäuse 50 dargestellt, welches entsprechende Mittel beinhaltet, um die Welle des (Elektro-)Motors mit der Führungsvorrichtung 7 zu koppeln. Für den Fall, dass sich die Welle des (Elektro-)Motors 42 dreht, werden ebenfalls die Mitnehmer 6a, 6b in Bewegung versetzt.

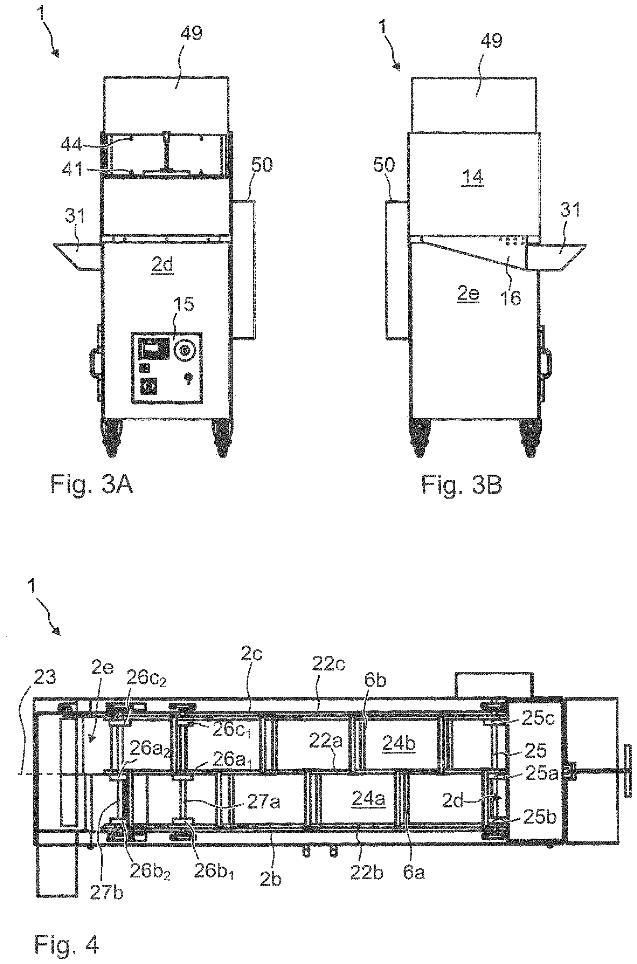

Die Figuren 3A, 3B und 4 zeigen verschiedene Ansichten der erfindungsgemäßen Durchlauf-Frittiervorrichtung 1. Figur 3A zeigt dabei eine Sicht in Richtung der ersten Stirnwand 2d. Figur 3B zeigt eine Sicht in Richtung der zweiten Stirnwand 2e. Figur 4 zeigt eine Draufsicht auf eine Oberseite der Durchlauf-Frittiervorrichtung 1.

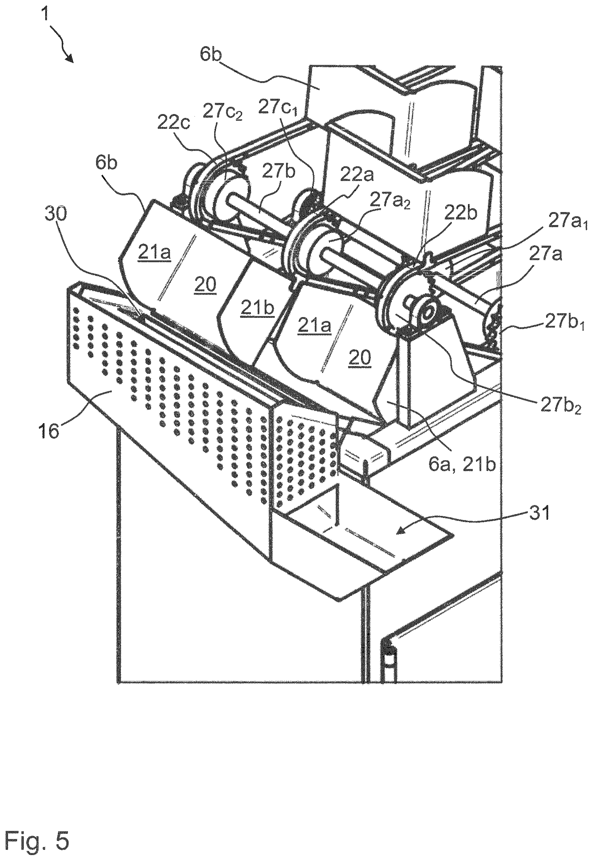

Figur 5 zeigt eine vergrößerte Darstellung eines Ausschnitts der erfindungsgemäßen Durchlauf-Frittiervor-richtung 1, die eine Entnahmestelle 16 zeigt, an der das frittierte Frittiergut 10 ausgeworfen wird. Weiterhin sind in dieser Zeichnungsfigur die einzelnen Mitnehmer 6a, 6b vergrößert dargestellt. Der entsprechende Mitnehmer 6a, 6b umfasst eine Mitnehmerrückwand 20, die entlang der ersten Bewegungsbahn 8a senkrecht oder mit einer Komponente überwiegend senkrecht zum Wannenboden 2a oder zur ersten oder zweiten Seitenwand 2b, 2c erläuft. Diese Mitnehmerrückwand 20 taucht in den Frittierraum 3 ein. Vorzugsweise ist sie im ersten Abschnitt 8a₁ der ersten Bewegungsbahn 8a überwiegend unterhalb der Füllstandshöhe 9 angeordnet.

Der jeweilige Mitnehmer 6a, 6b umfasst vorzugsweise noch eine erste und eine zweite Mitnehmerseitenwand 21a, 21b, die parallel oder mit einer Komponente überwiegend parallel zur ersten und/oder zweiten Seitenwand 2b, 2c der Frittierwanne 2 ausgerichtet sind. Die erste Mitnehmerseitenwand 21a ist an einer ersten Seite der Mitnehmerrückwand 20 angeordnet, wobei die zweite Mitnehmerseitenwand 21b an einer zweiten Seite der Mitnehmerrückwand 20 angeordnet ist. Die erste Seite und die zweite Seite liegen sich dabei gegenüber. Dadurch ist der Mitnehmer 6a, 6b in Draufsicht vorzugsweise U-förmig gestaltet. Der Mitnehmer 6a, 6b ist dabei in Richtung des Wannenbodens 2a vorzugsweise überwiegend bzw. vollständig geöffnet. In Bewegungsrichtung (erste bzw. zweite Bewegungsrichtung 8a, 8b) des Mitnehmers 6a, 6b sind die erste und die zweite Mitnehmerseitenwand 21a, 21b vor der Mitnehmerrückwand 20 angeordnet.

Die Mitnehmerrückwand 20 ist vorzugsweise mit Öffnungen durchsetzt. Diese Öffnungen sind kleiner als das zu frittierende Frittiergut. Gleiches kann auch für die Mitnehmerseitenwände 21a, 21b gelten.

Die Mitnehmer 6a, 6b bestehen bevorzugt aus nichtrostendem Metall, wie Stahl, insbesondere Edelstahl. Das Gleiche gilt auch für die Frittierwanne 2.

Mit Hinblick auf Figur 2 ist die Führungsvorrichtung 7 gezeigt. Diese umfasst ein erstes umlaufendes Antriebsmittel 22a, bei welchem es sich vorzugsweise um eine Antriebskette handelt. Es könnte sich allerdings auch um einen Antriebsrahmen handeln. Die Vielzahl der Mitnehmer 6a, 6b sind an dem umlaufenden ersten Antriebsmittel 22a befestigt. Die Mitnehmer 6a, 6b können eingehängt bzw. mit dem umlaufenden ersten Antriebsmittel 22a verschraubt werden.

Mit Blick auf Figur 4 ist zu erkennen, dass das erste umlaufende Antriebsmittel 22a in etwa in der Mitte der Frittierwanne 2 entlang einer Längsachse 23 verläuft. Die Längsachse 23 erstreckt sich entlang der Frittierwanne 2. Dadurch ist die Frittierwanne 2 in einem ersten Frittierbereich 24a und in einem zweiten Frittierbereich 24b unterteilt.

Weiterhin ist gezeigt, dass sich die Mitnehmer 6a, 6b in eine Vielzahl von ersten Mitnehmern 6a und eine Vielzahl von zweiten Mitnehmern 6b unterteilen. Die Vielzahl von ersten Mitnehmern 6a sind mit ihren ersten Mitnehmerseitenwänden 21a und/oder mit ihren Mitnehmerrückwänden 20 an dem ersten Antriebsmittel 22a befestigt, wodurch die erste Vielzahl von Mitnehmern 6a in dem ersten Frittierbereich 24a bewegbar sind (siehe Fig. 5).

Die zweite Vielzahl von Mitnehmern 6b sind dagegen mit ihren zweiten Mitnehmerseitenwänden 21b und/oder mit ihren Mitnehmerrückwänden 20 an dem ersten Antriebsmittel 22a befestigt, wodurch die zweite Vielzahl von Mitnehmern 6b in dem zweiten Frittierbereich 24b bewegbar sind. In diesem Fall werden die Mitnehmer 6a, 6b nicht nur in Längsrichtung 23 versetzt zueinander bewegt, sondern sind auch quer zur Längsachse 23 versetzt zueinander angeordnet. Dies ist allerdings optional. Im Übrigen wäre es auch möglich, dass die Frittierwanne 2 lediglich eine Breite aufweisen würde, die der Breite eines Mitnehmers 6a, 6b entspricht bzw. nur unwesentlich größer ist. Unter dem Wort "unwesentlich" ist in diesem Zusammenhang zu verstehen, dass keine zwei Mitnehmer 6a, 6b nebeneinander, also quer zur Längsachse 23 angeordnet werden könnten.

Die erste Vielzahl von Mitnehmern 6a und die zweite Vielzahl von Mitnehmern 6b sind in Umlaufrichtung der Mitnehmer 6a, 6b an unterschiedlichen Stellen an dem ersten Antriebsmittel 22a befestigt.

Optional umfasst die Führungsvorrichtung noch ein zweites und ein drittes umlaufendes Antriebsmittel 22b, 22c, die alle vorzugsweise parallel oder überwiegend parallel zueinander angeordnet sind. Bei diesen zweiten und dritten Antriebsmitteln 22b, 22c handelt es sich vorzugsweise um eine Antriebskette oder um einen Antriebsriemen. Die erste Vielzahl von Mitnehmern 6a sind dabei mit ihren zweiten Mitnehmerseitenwänden 21b und/oder mit ihren Mitnehmerrückwänden 20 an dem zweiten Antriebsmittel 22b befestigt. Die zweite Vielzahl von Mitnehmern 6b sind mit ihren ersten Mitnehmerseitenwänden 21a und/oder mit ihren Mitnehmerrückwänden 20 an dem dritten Antriebsmittel 22c befestigt. Die Befestigung erfolgt vorzugsweise in analoger Weise wie die Befestigung an dem ersten Antriebsmittel 22a.

Jedes Antriebsmittel 22a, 22b, 22c wird über ein Antriebsrad 25a, 25b, 25c angetrieben, wobei ein Antriebsrad 25a, 25b, 25c jedes Antriebsmittels 22a, 22b, 22c an derselben Antriebswelle 25 angeordnet ist wie je ein Antriebsrad 25a, 25b, 25c der anderen Antriebsmittel 22a, 22b, 22c, so dass die Antriebsmittel 22a, 22b, 22c drehgekoppelt sind. Die Antriebswelle 25 ist dabei wiederum mit dem nicht dargestellten (Elektro-)Motor über einen Riemen bzw. über eine Kette drehgekoppelt.

Grundsätzlich könnte es sich bei der Antriebswelle 25 auch direkt um die Welle des (Elektro-)Motors handeln. Weiterhin umfasst die Führungsvorrichtung 7 zumindest für jedes Antriebsmittel 22a, 22b, 22c zumindest ein Laufrad 26a₁, 26a₂, 26b₁, 26b₂, 26c₁, 26c₂. Dabei sind jeweils ein Laufrad 26a₁, 26a₂, 26b₁, 26b₂, 26c₁, 26c₂ jedes Antriebsmittels 22a, 22b, 22c an derselben Welle 27a, 27b angeordnet wie je ein Laufrad 26a₁, 26a₂, 26b₁, 26b₂, 26c₁, 26c₂ der anderen Antriebsmittel 22a, 22b, 22c.

Die ersten Laufräder 26a₁, 26b₁, 26c₁ der Antriebsmittel 22a, 22b, 22c sind alle an der gemeinsamen Welle 27a angeordnet. Die zweiten Laufräder 26a₂, 26b₂, 26c₂ der Antriebsmittel 22a, 22b, 22c sind ebenfalls gemeinsam an der zweiten Welle 27b angeordnet.

Grundsätzlich wäre es möglich, dass die Führungsvorrichtung 7 für jedes Antriebsmittel 22a, 22b, 22c über genau ein Antriebsrad 25a, 25b, 25c und über genau ein Laufrad 26a₁, 26b₁, 26c₁ oder 26a₂, 26b₂, 26c₂ verfügt.

Die Antriebsräder 25a, 25b, 25c sind, wie auch die Antriebswelle 25 im Bereich der ersten Stirnwand 2d angeordnet. Die Laufräder 26a₁, 26b₁, 26c₁ bzw. 26a₂, 26b₂, 26c₂ sind, wie auch die entsprechenden Wellen 27a bzw. 27b, im Bereich der zweiten Stirnwand 2e angeordnet.

Der Wortlaut "im Bereich" ist so zu verstehen, dass sich dieser bezogen auf die Länge der Frittierwanne 2 nicht weiter als 10% oder 20% oder 30% oder 40% oder 50% der Länge von der entsprechenden Stirnwand 2d, 2e weg erstreckt.

Mit Blick auf die Figur 2 ist die Lage der einzelnen Antriebs- und Laufräder 25a, 25b, 25c, 26a₁, 26b₁, 26c₁ bzw. 26a₂, 26b₂, 26c₂ zu erkennen. Die Antriebsräder 25a, 25b, 25c sind im ersten Abschnitt 8a₁ am Übergang der zweiten Bewegungsbahn 8b zur ersten Bewegungsbahn 8a angeordnet.

Erste Laufräder 26a₁, 26b₁, 26c₁ sind am Übergang vom ersten Abschnitt 8a₁ zum zweiten Abschnitt 8a₂ der ersten Bewegungsbahn 8a angeordnet. Der erste Abschnitt 8a₁ ist vorzugsweise länger als der zweite Abschnitt 8a₂. Vorzugsweise ist dieser um mehr als 30% oder um mehr als 40% oder um mehr als 50% oder um mehr als 70% oder um mehr als 90% oder um mehr als 130% oder um mehr als 160% oder um mehr als 200% länger als der zweite Abschnitt 8a₂.

Zweite Laufräder 26a₂, 26b₂, 26c₂ sind am Übergang der ersten Bewegungsbahn 8a zur zweiten Bewegungsbahn 8b angeordnet.

Die zweiten Laufräder 26a₂, 26b₂, 26c₂ sind weiter vom Wannenboden 2a beabstandet als die ersten Laufräder 26a₁, 26b₁, 26c₁ und/oder als die Antriebsräder 25a, 25b, 25c.

Der Abstand zwischen den Antriebsrädern 25a, 25b, 25c zu den ersten Laufrädern 26a₁, 26b₁, 26c₁ ist größer als ein Abstand zwischen den ersten Laufrädern 26a₁, 26b₁, 26c₁ zu den zweiten Laufrädern 26a₂, 26b₂, 26c₂.

Die Antriebsräder 25a, 25b, 25c sind in etwa gleich weit vom Wannenboden 2a beabstandet wie die ersten Laufräder 26a₁, 26b₁, 26c₁. Eine Abweichung von weniger als 10%, vorzugsweise von weniger als 5%, vorzugsweise weniger als 3% ist möglich. Der Abstand wird bezüglich der Längsachse durch die entsprechende Welle 25, 27a hin zum Wannenboden 2a bestimmt.

Das erste, zweite und dritte Antriebsmittel 22a, 22b, 22c bestehen wie die Antriebsräder 25a, 25b, 25c und/oder die Laufräder 26a₁, 26b₁, 26c₁ bzw. 26a₂, 26b₂, 26c₂ aus nicht rostendem Metall, insbesondere Stahl, vorzugsweise Edelstahl.

Die Geschwindigkeit, mit welcher sich die ersten Mitnehmer 6a durch den Frittierraum 3 bewegen, entspricht der Geschwindigkeit, mit welcher sich die zweiten Mitnehmer 6b durch den Frittierraum 3 bewegen.

Der zweite Abschnitt 8a₂ ist gegenüber dem ersten Abschnitt 8a₁ geneigt. Vorzugsweise sind die Mitnehmerrückwände 20 im ersten Abschnitt 8a₁ mit einer Komponente senkrecht oder überwiegend senkrecht zum Wannenboden 2a ausgerichtet. Weiter vorzugsweise sind die Mitnehmerrückwände 20 im zweiten Abschnitt 8a₂ mit einer Komponente senkrecht oder mit einer Komponente überwiegend senkrecht zur zweiten Stirnwand 2e ausgerichtet.

An die zweite Stirnwand 2e schließt sich die Entnahmestelle 16 an. Diese umfasst ein Gehäuse, welches an der Gehäuseoberseite eine Öffnung 30 aufweist, die sich vorzugsweise über den größten Teil der Längsachse des Gehäuses erstreckt. Sobald sich ein Mitnehmer 6a, 6b im zweiten Abschnitt 8a₂ befindet bzw. vom zweiten Abschnitt 8a₂ der ersten Bewegungsbahn 8a zur zweiten Bewegungsbahn 8b übergeht, wird das frittierte Frittiergut 10, welches durch die Mitnehmerrückwand 20 bewegt wird, die gegenüber dem Wannenboden 2a geneigte, zweite Stirnwand 2e hinaufgeschoben und fällt durch die Öffnung 30 in die Entnahmestelle 16.

Die Entnahmestelle 16 umfasst außerdem vorzugsweise Öffnungen am Gehäuseboden, über die vorhandenes Fett bzw. Öl am Frittiergut 10 abtropfen kann. Dieses noch vorhandene Fett bzw. Öl wird vorzugsweise über einen nicht dargestellten Kanal dem Frittierraum 3 erneut zugeführt.

Der Boden der Entnahmestelle 30 verläuft vorzugsweise schräg gegenüber dem Wannenboden 2a bzw. gegenüber dem Untergrund, auf dem die Durchlauf-Frittiervorrichtung 1 angeordnet ist, so dass frittiertes Frittiergut 10, welches durch die Öffnung 30 der Entnahmestelle 16 hinzugeführt wird, auf einer Seite der Entnahmestelle 16 in einen Auffangbehälter 31 fällt. Aus diesem zumindest nach oben geöffneten Auffangbehälter 31, der ebenfalls Bestandteil der Entnahmestelle 16 ist, kann das frittierte Frittiergut 10 entnommen werden.

Die dargestellte Abdeckung 14 überdeckt vorzugsweise auch die Entnahmestelle 16, mit Ausnahme des Auffangbehälters 31.

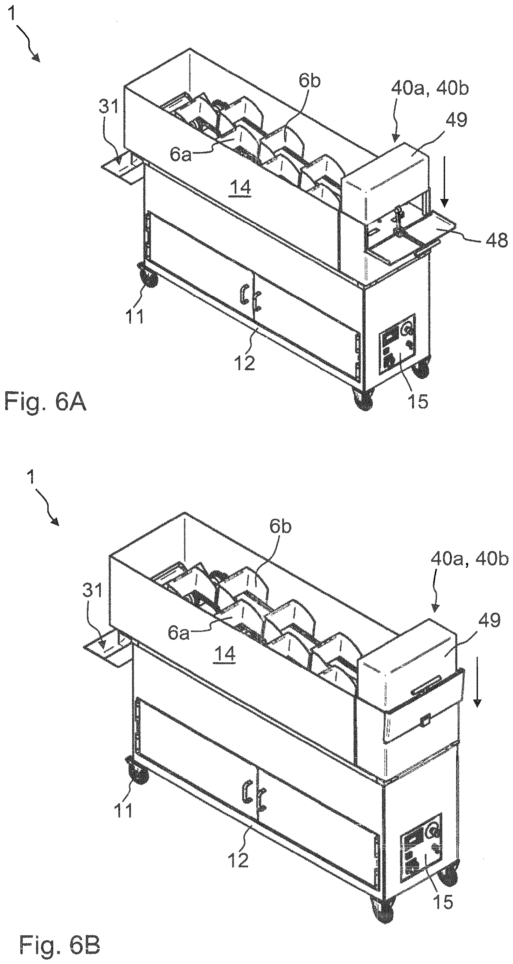

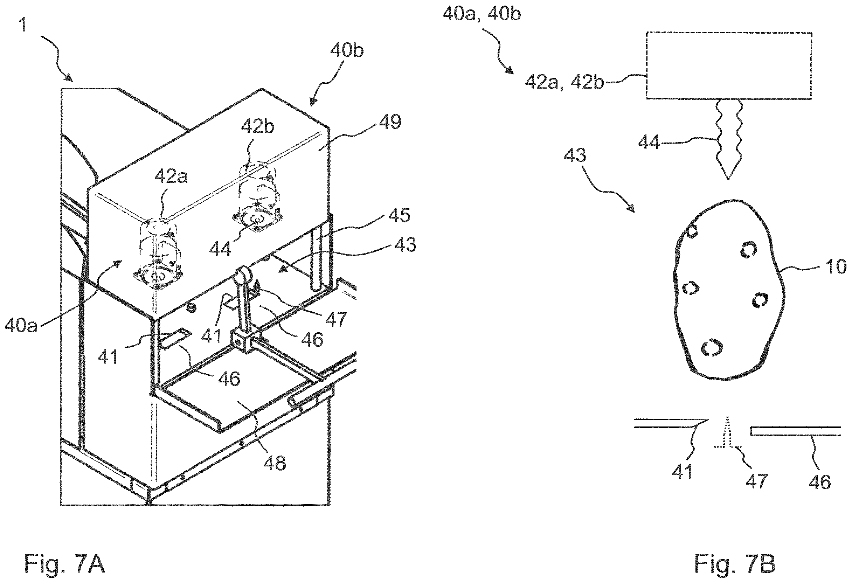

In den Figuren 6A bis 6C wird der Einsatz zumindest einer Schneidevorrichtung 40a näher erläutert, die vorzugsweise ebenfalls Bestandteil der Durchlauf-Frittiervorrichtung 1 ist. Diese zumindest eine Schneidevorrichtung 40a ist in den Figuren 7A und 7B vergrößert bzw. schematisch dargestellt. Die zumindest eine Schneidevorrichtung 40a dient zum Schneiden des Frittierguts 10. Bei dem Frittiergut 10 handelt es sich vorzugsweise um Kartoffeln. Die zumindest eine Schneidevorrichtung 40a umfasst zumindest eine Schneidekante 41 (vergrößerte Darstellung in den Figuren 7A, 7B) und einen elektrischen Motor 42a. Der elektrische Motor 42a ist in Relation zur Schneidekante 41 auf diese zu und von dieser weg bewegbar, wobei zwischen der Schneidekante 41 und dem elektrischen Motor 42a ein Aufnahmeraum 43 gebildet ist, in den das zu zerschneidende Frittiergut 10 einbringbar ist. Dieser Aufnahmeraum 43 ist variabel. Er wird größer, wenn sich der elektrische Motor 42a von der Schneidekante 41 wegbewegt und er wird kleiner, wenn sich der elektrische Motor 42a auf die Schneidekante zubewegt. Vorzugsweise ist die Schneidekante 41 ortsfest angeordnet, so dass sich lediglich der elektrische Motor 42a auf diese zu und von dieser weg bewegt. Der elektrische Motor 42a bewegt sich dann entlang einer Geraden. Der elektrische Motor 42a umfasst zumindest ein Befestigungsmittel 44, das dazu ausgebildet ist, das Frittiergut 10 drehfest an der Welle des elektrischen Motors 42a zu befestigen, also zu koppeln. Dabei ist das Befestigungsmittel 44 fest mit der Welle des elektrischen Motors 42a gekoppelt bzw. stellt eine Verlängerung dieser Welle dar. Eine Rotationsbewegung der Welle des elektrischen Motors 42a führt dazu, dass das Frittiergut 10 ebenfalls (schlupffrei) gedreht wird. Durch die Drehung des Frittierguts 10 schneidet sich die zumindest eine Schneidekante 41 in dieses ein. Wird nun der Abstand zwischen dem Elektromotor 42a zur Schneidekante 41 verringert, so wird das Frittiergut 10 über zumindest den überwiegenden Teil seiner Länge und auch über den überwiegenden Teil seiner gesamten Breite zerschnitten. Das zerschnittene Frittiergut 10 ist spiralförmig. Eine Kartoffel wird vorzugsweise in ein einteiliges spiralförmiges Gebilde zerschnitten. Dadurch erfolgt der Transport durch die Frittierwanne 2 sehr zuverlässig. Damit sich der elektrische Motor 42a auf die Schneidekante 41 zu bewegen kann, ist dieser vorzugsweise an einer Stange 45 oder Schiene geführt, wobei das Eigengewicht des elektrischen Motors 42a gegebenenfalls mit zusätzlichen Gewichten und seiner sich drehenden Welle dazu führt, dass das Frittiergut 10 an der zumindest einen Schneidekante 41 zerschnitten wird. Die Bewegung des elektrischen Motors 42a in Richtung der Schneidkante 41 erfolgt dabei insbesondere ausschließlich aufgrund der Schwerkraft und entlang einer Geraden.

Das Befestigungsmittel 44 umfasst insbesondere eine Befestigungsspitze oder einen Befestigungszylinder oder einen Befestigungshohlzylinder, die bzw. der in das Frittiergut 10 einsteckbar ist. Der Durchmesser der Befestigungsspitze bzw. (Hohl-)Zylinders ist vorzugsweise in Längsrichtung alternierend. Dadurch ist sichergestellt, dass das Befestigungsmittel 44 sicher im Frittiergut 10 steckt und diese folglich drehgekoppelt sind, also drehfest gekoppelt sind.

Optional umfasst die zumindest eine Schneidevorrichtung 40a im Bereich der zumindest einen Schneidekante 41 eine Auflagefläche 46 und/oder einen Arretierungsdorn 47. Das zu frittierende Frittiergut 10 kann zumindest teilweise auf der Auflagefläche 46 aufliegen und/oder kann auf den Arretierungsdorn 47 aufgespießt werden. Für den Fall, dass ein Arretierungsdorn 47 vorliegt, würde das Frittiergut 10 ausgerichtet sein, bevor das Befestigungsmittel 44, welches mit der Welle des Elektromotors 42 drehgekoppelt ist, das Frittiergut hält, bzw. in diese eingesteckt wird.

Der Arretierungsdorn 47 und/oder die Auflagefläche 46 kann gefedert angeordnet sein.

Die Auflagefläche 46 ist vorzugsweise unterhalb der zumindest einen Schneidekante 41 angeordnet. Dies bedeutet, dass sie näher in Richtung des Wannenbodens 2a angeordnet ist als die Schneidekante 41. Die zumindest eine Schneidekante 41 kann entlang einer Geraden verlaufen. Sie kann allerdings auch (teil)kreisförmig angeordnet sein.

Mit Hinblick auf Figur 7A ist zu erkennen, dass im Bereich der ersten Stirnwand 2d eine weitere Schneidevorrichtung 40b zum Schneiden des Frittierguts 10 angeordnet ist.

Die zumindest eine Schneidevorrichtung 40a ist mit ihrem elektrischen Motor 42a derart angeordnet, dass das von ihr zerschneidbare Frittiergut 10 im Bereich der ersten Stirnwand 2d in den ersten Frittierbereich 24a fällt, wohingegen die weitere Schneidevorrichtung 40b mit ihrem elektrischen Motor 42b derart angeordnet ist, dass das von ihr zerschneidbare Frittiergut 10 im Bereich der ersten Stirnwand 2d in den zweiten Frittierbereich 24b fällt.

Über die entsprechenden Mitnehmer 6a, 6b wird das zerschnittene Frittiergut 10 vom Bereich der ersten Stirnwand 2d zur zweiten Stirnwand 2e transportiert.

Der jeweilige Aufnahmeraum 43, der zwischen den entsprechenden Schneidekanten 41 und den Elektromotoren 42a, 42b gebildet ist, kann vorzugsweise zumindest teilweise durch eine Abdeckeinrichtung 48 verschließbar sein. Der Aufnahmeraum 43 ist für das Bedienpersonal insbesondere von einer Stirnseite der Durchlauf-Frittiervorrichtung 1 aus zugänglich. Die Abdeckeinrichtung 48 besteht vorzugsweise aus einem Metall wie Stahl, weiter vorzugsweise Edelstahl. Die Abdeckeinrichtung 48 kann allerdings auch aus einem Glas oder durchsichtigen Kunststoff bestehen, so dass das Zerschneiden des Frittierguts 10 von außen sichtbar ist.

Die Steuervorrichtung 15 ist dazu ausgebildet, den Elektromotor 42a, 42b nur dann zu aktivieren, wenn die Abdeckeinrichtung 48 den Aufnahmeraum 43 verschließt. Die Steuervorrichtung 15 ist vorzugsweise dazu ausgebildet, den Elektromotor 42a, 42b nur dann zu aktivieren, wenn sich dieser auf die Schneidekante 41 zu bewegt. Für den Fall, dass sich der Elektromotor 42a, 42b von der Schneidekante 41 weg bewegt oder sich gar nicht bewegt, soll der Elektromotor 42a, 42b vorzugsweise nicht aktiviert werden.

Die Steuervorrichtung 15 ist außerdem dazu ausgebildet, die Drehzahl der Elektromotoren 42a, 42b einzustellen, sodass die Kartoffeln in eine gewünschte Dicke zerschnitten werden.

Die Elektromotoren 42a, 42b bewegen sich im ausgeschalteten Zustand vorzugsweise nicht in Richtung der zumindest einen Schneidekante 41. Eine solche Bewegung wird durch nicht dargestellte Arretierungsmittel verhindert. Erst im eingeschalteten Zustand bewegen sie sich vorzugsweise lediglich aufgrund der Gewichtskraft in Richtung der zumindest einen Schneidekante 41. Es wäre auch möglich, dass noch zusätzliche weitere Antriebsmittel vorgesehen sind, die dafür sorgen, dass die Elektromotoren 42a, 42b in Richtung der Schneidekante 41 bewegt werden. Diese zusätzlichen Antriebsmittel können auch dazu ausgebildet sein, dass sie die Elektromotoren 42a, 42b von der Schneidekante 41 weg bewegen, nachdem diese sich der Schneidekante 41 maximal genähert haben. In diesem Fall ist davon auszugehen, dass die Kartoffel vollständig zerschnitten ist. Die Elektromotoren 42a, 42b bewegen sich dann selbständig wieder in eine Aufnahmeposition (für eine neue Kartoffel), in welcher sie von der Schneidekante 41 auf eine vorbestimmte Entfernung oder maximale Entfernung beabstandet sind.

Die Elektromotoren 42a, 42b können synchron zueinander in Richtung der Schneidekante 41 bewegt werden. Dies ist insbesondere dann der Fall, wenn die Elektromotoren 42a, 42b von einem gemeinsamen Gehäuse 49 umgeben und/oder eingefasst sind. Ein solcher Fall ist in Figuren 6A bis 6C dargestellt. In der Figur 6A ist die Abdeckeinrichtung 48 geöffnet. Der Abstand zwischen den Elektromotoren 42a, 42b und der jeweiligen Schneidekante 41 ist hier maximal. Dies bedeutet, dass der Aufnahmeraum 43 das größte Volumen besitzt. In diesem Zustand kann das zu frittierende Frittiergut 10 eingelegt und/oder entsprechend auf den Arretierungsdorn 47 bzw. das Befestigungsmittel 44 aufgespießt werden.

In der Figur 6B ist die Abdeckeinrichtung 48 geschlossen. In diesem Zustand können die Elektromotoren 42a, 42b aktiviert werden.

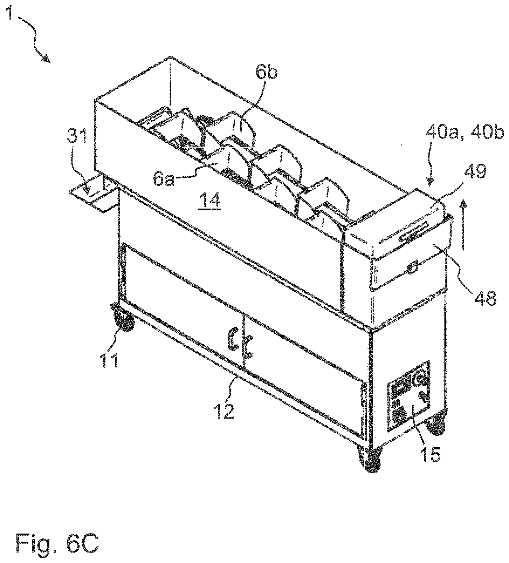

Figur 6C zeigt den Zustand, nachdem das in Figur 6A eingelegte zu frittierende Frittiergut 10 zerschnitten worden ist. Die Elektromotoren 42a, 42b haben sich in Richtung der zumindest einen Schneidekante 41 bewegt. Das gemeinsame Gehäuse 49, in welchem die Elektromotoren 42a, 42b eingefasst sind, hat sich aufgrund seines Eigengewichts abgesenkt. Dadurch und durch die Drehung des zu frittierenden Frittierguts 10 wurde dieses an der Schneidekante 41 zerschnitten.

Im Anschluss daran kann die Abdeckeinrichtung 48 wieder geöffnet werden. Die Elektromotoren 42a, 42b können wieder weg von der Schneidekante 41 bewegt werden. Dies gelingt vorzugsweise manuell. Es könnte allerdings auch ein weiterer Elektromotor vorgesehen sein, der die Elektromotoren 42a, 42b und optional ihr gemeinsames Gehäuse 49 von der zumindest einen Schneidekante 41 abhebt. Dieser weitere Elektromotor, der ebenfalls über die Steuereinheit 15 angesteuert werden könnte, könnte auch dafür sorgen, dass die Elektromotoren 42a, 42b auf die jeweilige zumindest eine Schneidekante 41 zu bewegt werden.

Wie in Figur 2 gezeigt ist, ist die Schneidkante 41 in Draufsicht auf die Frittierwanne 2 oberhalb des Frittierraums 3 ausgebildet. Insbesondere ist die Schneidkante 41 durch eine Öffnung in einer Blechanordnung gebildet, die oberhalb der Führungsvorrichtung 7 im Bereich der ersten Stirnwand 2d angeordnet ist.

Die Durchlauf-Frittiervorrichtung 1 ist insbesondere transportbandfrei ausgeführt.

Ein Ausführungsbeispiel der erfindungsgemäßen Durchlauf-Frittiervorrichtung 1 umfasst das folgende Merkmal:
- ein Spalt zwischen dem jeweiligen Mitnehmer 6a, 6b und dem Wannenboden 2a und/oder der zweiten Stirnwand 2e und/oder der ersten und/oder der zweiten Seitenwand 2b, 2c ist kleiner als das durchschnittliche zu frittierende Frittiergut 10.

Ein anderes Ausführungsbeispiel der erfindungsgemäßen Durchlauf-Frittiervorrichtung 1 umfasst das folgende Merkmal:
- der jeweilige Mitnehmer 6a, 6b ist so ausgebildet und/oder angeordnet, dass er sich auf zumindest einem Teilbereich der ersten Bewegungsbahn 8a vom Wannenboden 2a bis über die Füllstandshöhe 9 hinaus erstreckt.

Ein weiteres Ausführungsbeispiel der erfindungsgemäßen Durchlauf-Frittiervorrichtung 1 umfasst die folgenden Merkmale:
- die erste Bewegungsbahn 8a verläuft in einem ersten Abschnitt 8a₁ parallel oder mit einer Komponente überwiegend parallel zum Wannenboden 2a;
- die erste Bewegungsbahn 8a verläuft in einem zweiten Abschnitt 8a₂ parallel oder überwiegend parallel zur zweiten Stirnwand 2e;
- die zweite Bewegungsbahn 8b verläuft geneigt zu dem Wannenboden 2a, wobei ein Abstand zwischen der zweiten Bewegungsbahn 8b und dem Wannenboden 2a in Richtung der ersten Stirnwand 2d abnimmt.

Ein zusätzliches Ausführungsbeispiel der erfindungsgemäßen Durchlauf-Frittiervorrichtung 1 umfasst die folgenden Merkmale:
- die Antriebsräder 25a, 25b, 25c sind im ersten Abschnitt 8a₁ am Übergang der zweiten Bewegungsbahn 8b zur ersten Bewegungsbahn 8a angeordnet;
- erste Laufräder 26a₁, 26b₁, 26c₁ sind am Übergang vom ersten Abschnitt 8a₁ zum zweiten Abschnitt 8a₂ der ersten Bewegungsbahn 8a angeordnet;
- zweite Laufräder 26a₂, 26b₂, 26c₂ sind am Übergang der ersten Bewegungsbahn 8a zur zweiten Bewegungsbahn 8b angeordnet.

Ein weiteres Ausführungsbeispiel der erfindungsgemäßen Durchlauf-Frittiervorrichtung 1 umfasst das folgende Merkmal:
- die erste Vielzahl von Mitnehmern 6a und die zweite Vielzahl von Mitnehmern 6b sind in Umlaufrichtung der Mitnehmer 6a, 6b an unterschiedlichen Stellen hintereinander und nebeneinander an dem ersten Antriebsmittel 22a befestigt und daher versetzt zueinander angeordnet.

Ein anderes Ausführungsbeispiel der erfindungsgemäßen Durchlauf-Frittiervorrichtung 1 umfasst die folgenden Merkmale:
- die Antriebsräder 22a, 22b, 22c sind im Bereich der ersten Stirnwand 2d angeordnet;
- die Laufräder 26a₁, 26b₁, 26c₁, 26a₂, 26b₂, 26c₂ sind im Bereich der zweiten Stirnwand 2e angeordnet.

Die Erfindung ist nicht auf die beschriebenen Ausführungsbeispiele beschränkt. Im Rahmen der Erfindung sind alle beschriebenen und/oder gezeichneten Merkmale beliebig miteinander kombinierbar.

## Patentansprüche

1. Durchlauf-Frittiervorrichtung (1) zum Frittieren von Frittiergut (10), insbesondere von Kartoffelchips mit den folgenden Merkmalen:
- mit einer Frittierwanne (2), die einen Wannenboden (2a) und eine umlaufende Wannenwand aufweist, wodurch ein Frittierraum (3) gebildet ist, wobei die umlaufende Wannenwand zumindest eine erste und eine zweite Seitenwand (2b, 2c) und eine erste und eine zweite Stirnwand (2d, 2e) umfasst;
- mit zumindest einer Heizvorrichtung, die dazu ausgebildet ist Öl oder Fett innerhalb der Frittierwanne (2) aufzuheizen;
- der Frittierraum (3) der Frittierwanne (2) ist bis zu einer Füllstandshöhe (9) mit Öl oder Fett gefüllt oder füllbar;
- mit einer Vielzahl von Mitnehmern (6a, 6b), die beabstandet zueinander an einer Führungsvorrichtung (7) befestigt sind;
- die Führungsvorrichtung (7) ist derart ausgebildet, dass sie die Mitnehmer (6a, 6b) in einer Umlaufrichtung durch die Frittierwanne (2) bewegt, wobei:
a) die Mitnehmer (6a, 6b) im Bereich der ersten Stirnwand (2d) in die Frittierwanne (2) eintauchen und innerhalb der Frittierwanne (2) auf einer ersten Bewegungsbahn (8a) zumindest abschnittsweise von der ersten Stirnwand (2d) in Richtung der zweiten Stirnwand (2e) bewegbar sind; und
b) die Mitnehmer (6a, 6b) auf einer zweiten Bewegungsbahn (8b) zumindest abschnittsweise von der zweiten Stirnwand (2e) in Richtung der ersten Stirnwand (2d) oberhalb der Füllstandshöhe (9) bewegbar sind.
**gekennzeichnet durch** die folgenden Merkmale:
- im Bereich der ersten Stirnwand (2d) ist zumindest eine Schneidevorrichtung (40a) zum Scheiden des Frittierguts (10) angeordnet, wobei es sich bei dem Frittiergut (10) um Kartoffeln handelt;
- die zumindest eine Schneidevorrichtung (40a) umfasst zumindest eine Schneidekante (41) und einen elektrischen Motor (42a), wobei der elektrische Motor (42a) in Relation zur Schneidekante (41) auf diese zu und von dieser weg bewegbar ist, wobei zwischen der Schneidekante (41) und dem elektrischen Motor (42a) ein Aufnahmeraum (43) gebildet ist, in den das zu zerschneidende Frittiergut (10) einbringbar ist;
- der elektrische Motor (42a) umfasst zumindest ein Befestigungsmittel (44), das dazu ausgebildet ist, das Frittiergut (10) drehgekoppelt an der Welle des elektrischen Motors (42a) zu befestigen, wobei durch eine Rotationsbewegung der Welle des elektrischen Motors (42a) das Frittiergut (10) zerschneidbar ist und im Bereich der ersten Stirnwand (2d) in die Frittierwanne (2) fällt.

2. Durchlauf-Frittiervorrichtung (1) nach Anspruch 1, **gekennzeichnet durch** die folgenden Merkmale:
- die erste Bewegungsbahn (8a) verläuft parallel oder mit einer Komponente überwiegend parallel zur zweiten Bewegungsbahn (8b); und/oder
- die erste Bewegungsbahn (8a) ist gleich lang wie die zweite Bewegungsbahn (8b), oder die erste Bewegungsbahn (8a) ist um mehr als 10% oder 20% oder 30% oder 50% oder um mehr als 70% aber um weniger als 100% oder 80% oder 60% oder 40% oder um weniger als 20% länger als die zweite Bewegungsbahn (8b); und/oder
- die Mitnehmer (6a, 6b) verlaufen in der ersten Bewegungsbahn (8a) überwiegend unterhalb der Füllstandshöhe (9) und in der zweiten Bewegungsbahn (8b) lediglich oberhalb der Füllstandshöhe (9).

3. Durchlauf-Frittiervorrichtung (1) nach einem der vorherigen Ansprüche, **gekennzeichnet durch** das folgende Merkmal:
- die zweite Stirnwand (2e) verläuft schräg, insbesondere in einem Winkel von mehr als 20° oder mehr als 30° oder mehr als 40° oder mehr als 50° oder mehr als 60° oder mehr als 70° aber von weniger als 80° oder weniger als 70° oder weniger als 60° oder weniger als 50° oder weniger als 40° oder weniger als 30° zum Wannenboden (2a).

4. Durchlauf-Frittiervorrichtung (1) nach einem der vorherigen Ansprüche, **gekennzeichnet durch** das folgende Merkmal:
- der Mitnehmer (6a, 6b) umfasst eine Mitnehmerrückwand (20), die zumindest entlang der ersten Bewegungsbahn (8a) senkrecht oder mit einer Komponente überwiegend senkrecht zum Wannenboden (2a) und zur ersten und/oder zweiten Seitenwand (2b, 2c) verläuft und in den Frittierraum (3) unterhalb der Füllstandhöhe (9) eintaucht;
- der Mitnehmer (6a, 6b) umfasst eine erste und eine zweite Mitnehmerseitenwand (21a, 21b), die parallel oder mit einer Komponente überwiegend parallel zur ersten und/oder zweiten Seitenwand (2b, 2c) der Frittierwanne (2) ausgerichtet sind;
- die erste Mitnehmerseitenwand (21a) ist an einer ersten Seite der Mitnehmerrückwand (20) angeordnet und die zweite Mitnehmerseitenwand (21b) ist an einer zweiten Seite der Mitnehmerrückwand (20) angeordnet, die der ersten Seite gegenüberliegt, wodurch der Mitnehmer ((6a, 6b)) in Draufsicht U-förmig gestaltet ist;
- der Mitnehmer (6a, 6b) ist in Richtung des Wannenbodens (2) überwiegend oder vollständig geöffnet;
- in Bewegungsrichtung des Mitnehmers (6a, 6b) sind die erste und die zweite Mitnehmerseitenwand (21a, 21b) vor der Mitnehmerrückwand (20) angeordnet.

5. Durchlauf-Frittiervorrichtung (1) nach Anspruch 4, **gekennzeichnet durch** die folgenden Merkmale:
- die Mitnehmerrückwand (20) und/oder die Mitnehmerseitenwände (21a, 21b) sind mit Öffnungen durchsetzt;
- die Öffnungen sind kleiner als das zu frittierende Frittiergut (10).

6. Durchlauf-Frittiervorrichtung (1) nach einem der vorherigen Ansprüche, **gekennzeichnet durch** die folgenden Merkmale:
- die Führungsvorrichtung (7) umfasst ein erstes umlaufendes Antriebsmittel (22a), bei welchem es sich um eine Antriebskette oder einen Antriebsriemen handelt,
- die Vielzahl der Mitnehmer (6a, 6b) sind an dem umlaufenden ersten Antriebsmittel (22a) befestigt;
- das erste umlaufende Antriebsmittel (22a) verläuft in etwa in der Mitte der Frittierwanne (2) entlang einer Längsachse (23), die sich entlang der Frittierwanne (2) erstreckt, wodurch die Frittierwanne (2) in einen ersten Frittierbereich (24a) und in einen zweiten Frittierbereich (24b) unterteilt ist;
- eine erste Vielzahl von Mitnehmern (6a) sind mit ihren ersten Mitnehmerseitenwänden (21a) und/oder mit ihren Mitnehmerrückwänden (20) an dem ersten Antriebsmittel (22a) befestigt, so dass die erste Vielzahl von Mitnehmern (6a) in dem ersten Frittierbereich (24a) bewegbar sind;
- eine zweite Vielzahl von Mitnehmern (6b) sind mit ihren zweiten Mitnehmerseitenwänden (21b) und/oder mit ihren Mitnehmerrückwänden (20) an dem ersten Antriebsmittel (22a) befestigt, so dass die zweite Vielzahl von Mitnehmern (6b) in dem zweiten Frittierbereich (24b) bewegbar sind.

7. Durchlauf-Frittiervorrichtung (1) nach Anspruch 6, **gekennzeichnet durch** die folgenden Merkmale:
- die Führungsvorrichtung umfasst ein zweites und ein drittes umlaufendes parallel zueinander angeordnetes Antriebsmittel (22b, 22c), bei denen es sich um eine Antriebskette oder einen Antriebsriemen handelt;
- die erste Vielzahl von Mitnehmern (6a) sind mit ihren zweiten Mitnehmerseitenwänden (21b) und/oder mit ihren Mitnehmerrückwänden (20) an dem zweiten Antriebsmittel (22b) befestigt;
- die zweite Vielzahl von Mitnehmern (6b) sind mit ihren ersten Mitnehmerseitenwänden (21a) und/oder mit ihren Mitnehmerrückwänden (20) an dem dritten Antriebsmittel (22c) befestigt.

8. Durchlauf-Frittiervorrichtung (1) nach Anspruch 7, **gekennzeichnet durch** die folgenden Merkmale:
- jedes Antriebsmittel (22a, 22b, 22c) ist über ein Antriebsrad (25a, 25b, 25c) antreibbar, wobei ein Antriebsrad (25a, 25b, 25c) jedes Antriebsmittels (22a, 22b, 22c) an derselben Antriebswelle (25) angeordnet ist wie je ein Antriebsrad (25a, 25b, 25c) der anderen Antriebsmittel (22a, 22b, 22c), sodass die Antriebsmittel (22a, 22b, 22c) drehgekoppelt sind;
- die Führungsvorrichtung (7) umfasst für jedes Antriebsmittel (22a, 22b, 22c) zumindest ein Laufrad (26a₁, 26b₁, 26c₁, 26a₂, 26b₂, 26c₂), wobei ein Laufrad (26a₁, 26b₁, 26c₁, 26a₂, 26b₂, 26c₂) jedes Antriebsmittels (22a, 22b, 22c) an derselben Welle (27a, 27b) angeordnet ist wie je ein Laufrad (26a₁, 26b₁, 26c₁, 26a₂, 26b₂, 26c₂) der anderen Antriebsmittel (22a, 22b, 22c).

9. Durchlauf-Frittiervorrichtung (1) nach einem der vorherigen Ansprüche, **gekennzeichnet durch** das folgende Merkmal:
- der elektrische Motor (42a) der zumindest einen Schneidevorrichtung (40a) ist an einer Stange oder Schiene (45) geführt, wobei das Eigengewicht des elektrischen Motors (42a) zusammen mit seiner drehenden Welle dazu führt, dass das Frittiergut (10) an der zumindest einen Schneidekante (41) zerschneidbar ist.

10. Durchlauf-Frittiervorrichtung (1) nach einem der vorherigen Ansprüche, **gekennzeichnet durch** die folgenden Merkmale:
- das Befestigungsmittel (44) umfasst eine Befestigungsspitze oder einen Befestigungszylinder oder einen Befestigungshohlzylinder, die bzw. der in das Frittiergut (10) einsteckbar ist; und/oder
- die zumindest eine Schneidevorrichtung (40a) umfasst im Bereich der zumindest einen Schneidekante (41) eine Auflagefläche (46) und/oder einen Arretierungsdorn (47), wobei das Frittiergut (10) zumindest teilweise auf der Auflagefläche (46) auflegbar ist und/oder auf den Arretierungsdorn (47) aufspießbar ist.

11. Durchlauf-Frittiervorrichtung (1) nach einem der vorherigen Ansprüche und Anspruch 6, **gekennzeichnet durch** die folgenden Merkmale:
- im Bereich der ersten Stirnwand (2d) ist eine weitere Schneidevorrichtung (40b) zum Scheiden des Frittierguts (10) angeordnet;
- die zumindest eine Schneidevorrichtung (40a) ist mit ihrem elektrischen Motor (42a) derart angeordnet, dass das von ihr zerschneitbare Frittiergut (10) im Bereich der ersten Stirnwand (2d) in den ersten Frittierbereich (24a) fällt, wohingegen die weitere Schneidevorrichtung (40b) mit ihrem elektrischen Motor (42b) derart angeordnet ist, dass das von ihr zerschneitbare Frittiergut (10) im Bereich der ersten Stirnwand (2d) in den zweiten Frittierbereich (24b) fällt.

12. Durchlauf-Frittiervorrichtung (1) nach einem der vorherigen Ansprüche, **gekennzeichnet durch** die folgenden Merkmale:
- der Aufnahmeraum (43) ist zumindest teilweise durch eine Abdeckeinrichtung (48) verschließbar;
- der elektrische Motor (42a) der zumindest einen Schneidevorrichtung (40a) ist nur dann aktivierbar, wenn die Abdeckeinrichtung (48) den Aufnahmeraum (43) zumindest teilweise verschließt.

13. Durchlauf-Frittiervorrichtung (1) nach einem der vorherigen Ansprüche, **gekennzeichnet durch** das folgende Merkmal:
- mit einer Steuervorrichtung (15), die dazu ausgebildet ist, die Geschwindigkeit der Mitnehmer (6a, 6b) und die Heizleistung der Heizvorrichtung so zu regeln, dass das Frittiergut (10) an der zweiten Stirnwand (2e) einen definierten Zustand erreicht.

14. Durchlauf-Frittiervorrichtung (1) nach einem der vorherigen Ansprüche, **gekennzeichnet durch** die folgenden Merkmale:
- mit einer Entnahmestelle (16), die an der zweiten Stirnwand (2e) angeordnet ist;
- die Entnahmestelle (16) umfasst einen Ablauf für flüssiges Fett oder Öl.

15. Durchlauf-Frittiervorrichtung (1) nach einem der vorherigen Ansprüche, **gekennzeichnet durch** die folgenden Merkmale:
- mit mehreren Rollen (11), die an der Unterseite eines Rahmes (12) der Durchlauf-Frittiervorrichtung (1) montiert sind, sodass die Durchlauf-Frittiervorrichtung (1) verschiebbar ist;
- zwischen der Frittierwanne (2) und dem Rahmen (12) befinden sich Staufächer (13).

## Claims

1. Continuous deep fryer (1) for deep frying food (10), in particular potato crisps, having the following features:
- the deep fryer comprises a deep-frying vat (2) having a vat base (2a) and a peripheral vat wall, thus forming a deep-frying chamber (3), the peripheral vat wall having at least a first and a second side wall (2b, 2c) and a first and a second end wall (2d, 2e);
- the deep fryer comprises at least one heating device which is designed to heat oil or fat inside the deep-frying vat (2);
- the deep-frying chamber (3) of the deep-frying vat (2) is or can be filled with oil or fat up to a filling level (9);
- the deep fryer comprises a plurality of drivers (6a, 6b) which are fastened to a guide device (7) at a spacing from one another;
- the guide device (7) is designed so as to move the drivers (6a, 6b) through the deep-frying vat (2) in a peripheral direction, with:
a) the drivers (6a, 6b) plunging into the deep-frying vat (2) in the region of the first end wall (2d) and being movable, inside the deep-frying vat (2), on a first movement path (8a), at least in portions from the first end wall (2d) towards the second end wall (2e); and
b) the drivers (6a, 6b) being movable, on a second movement path (8b), at least in portions from the second end wall (2e) towards the first end wall (2d), above the filling level (9),
**characterised by** the following features:
- at least one cutting device (40a) for cutting the food (10) is arranged in the region of the first end wall (2d), the food (10) being potatoes;
- the at least one cutting device (40a) comprises at least one cutting edge (41) and an electric motor (42a), the electric motor (42a) being movable towards and away from the cutting edge (41), relative thereto, a receiving chamber (43) being formed between the cutting edge (41) and the electric motor (42a), into which chamber the food (10) to be cut can be introduced;
- the electric motor (42a) comprises at least one fastening means (44) which is designed to fasten the food (10) to the shaft of the electric motor (42a) in a rotationally coupled manner, it being possible to cut the food (10) by means of a rotational movement of the shaft of the electric motor (42a) and said food falling into the deep-frying vat (2) in the region of the first end wall (2d).

2. Continuous deep fryer (1) according to claim 1, **characterised by** the following features:
- the first movement path (8a) extends in parallel with the second movement path (8b) or extends largely in parallel therewith by one component thereof; and/or
- the first movement path (8a) is the same length as the second movement path (8b), or the first movement path (8a) is more than 10% or 20% or 30% or 50% or more than 70% but less than 100% or 80% or 60% or 40% or less than 20% longer than the second movement path (8b); and/or
- the drivers (6a, 6b) extend largely below the filling level (9) on the first movement path (8a), and extend entirely above the filling level (9) on the second movement path (8b).

3. Continuous deep fryer (1) according to either of the preceding claims, **characterised by** the following feature:
- the second end wall (2e) extends obliquely, in particular at an angle of more than 20° or more than 30° or more than 40° or more than 50° or more than 60° or more than 70° but less than 80° or less than 70° or less than 60° or less than 50° or less than 40° or less than 30°, relative to the vat base (2a).

4. Continuous deep fryer (1) according to any of the preceding claims, **characterised by** the following features:
- the driver (6a, 6b) comprises a driver rear wall (20) which extends, at least along the first movement path (8a), perpendicularly to the vat base (2a) or largely perpendicularly thereto by one component thereof and towards the first and/or second end wall (2b, 2c), and plunges into the deep-frying chamber (3) below the filling level (9);
- the driver (6a, 6b) comprises a first and a second driver side wall (21a, 21b), which walls are oriented so as to be parallel to the first and/or second side wall (2b, 2c) of the deep-frying vat (2) or so as to be largely parallel thereto by one component thereof;
- the first driver side wall (21a) is arranged on a first side of the driver rear wall (20) and the second driver side wall (21b) is arranged on a second side of the driver rear wall (20) that is opposite the first side, as a result of which the driver ((6a, 6b)) is U-shaped in plan view;
- the driver (6a, 6b) is largely or completely open towards the vat base (2);
- in the direction of movement of the driver (6a, 6b), the first and the second driver side wall (21a, 21b) are arranged in front of the driver rear wall (20).

5. Continuous deep fryer (1) according to claim 4, **characterised by** the following features:
- the driver rear wall (20) and/or the driver side walls (21a, 21b) have openings passing therethrough;
- the openings are smaller than the food (10) to be deep-fried.

6. Continuous deep fryer (1) according to any of the preceding claims, **characterised by** the following features:
- the guide device (7) comprises a first circulating drive means (22a), which is a drive chain or a drive belt,
- the plurality of drivers (6a, 6b) are fastened to the first circulating drive means (22a);
- the first circulating drive means (22a) extends approximately in the centre of the deep-frying vat (2) along a longitudinal axis (23) which extends along the deep-frying vat (2), as a result of which the deep-frying vat (2) is divided into a first deep-frying region (24a) and a second deep-frying region (24b);
- a first plurality of drivers (6a) are fastened to the first drive means (22a) by the first driver side walls (21a) and/or driver rear walls (20) thereof, such that the first plurality of drivers (6a) are movable in the first deep-frying region (24a);
- a second plurality of drivers (6b) are fastened to the first drive means (22a) by the second driver side walls (21b) and/or driver rear walls (20) thereof, such that the second plurality of drivers (6b) are movable in the second deep-frying region (24b).

7. Continuous deep fryer (1) according to claim 6, **characterised by** the following features:
- the guide device comprises a second and a third circulating drive means (22b, 22c), which are arranged in parallel with one another and which are each a drive chain or a drive belt;
- the first plurality of drivers (6a) are fastened to the second drive means (22b) by the second driver side walls (21b) and/or driver rear walls (20) thereof;
- the second plurality of drivers (6b) are fastened to the third drive means (22c) by the first driver side walls (21a) and/or driver rear walls (20) thereof.

8. Continuous deep fryer (1) according to claim 7, **characterised by** the following features:
- each drive means (22a, 22b, 22c) can be driven by means of a drive wheel (25a, 25b, 25c), a drive wheel (25a, 25b, 25c) of each drive means (22a, 22b, 22c) being arranged on the same drive shaft (25) as a drive wheel (25a, 25b, 25c) of each of the other drive means (22a, 22b, 22c) such that the drive means (22a, 22b, 22c) are rotationally coupled;
- the guide device (7) comprises at least one running wheel (26a₁, 26b₁, 26c₁, 26a₂, 26b₂, 26c₂) for each drive means (22a, 22b, 22c), a running wheel (26a₁, 26b₁, 26c₁, 26a₂, 26b₂, 26c₂) of each drive means (22a, 22b, 22c) being arranged on the same shaft (27a, 27b) as a running wheel (26a₁, 26b₁, 26c₁, 26a₂, 26b₂, 26c₂) of each of the other drive means (22a, 22b, 22c).

9. Continuous deep fryer (1) according to any of the preceding claims, **characterised by** the following feature:
- the electric motor (42a) of the at least one cutting device (40a) is guided on a rod or rail (45), the weight of the electric motor (42a) together with the rotating shaft thereof making it possible for the food (10) to be cut on the at least one cutting edge (41).

10. Continuous deep fryer (1) according to any of the preceding claims, **characterised by** the following features:
- the fastening means (44) comprises a fastening spike or a fastening cylinder or a hollow fastening cylinder, which can be inserted into the food (10); and/or
- the at least one cutting device (40a) comprises, in the region of the at least one cutting edge (41), a support surface (46) and/or a locking pin (47), it being possible to place the food (10) at least in part on the support surface (46) and/or skewer said food on the locking pin (47).

11. Continuous deep fryer (1) according to any of the preceding claims and claim 6, **characterised by** the following features:
- a further cutting device (40b) for cutting the food (10) is arranged in the region of the first end wall (2d);
- the at least one cutting device (40a) is arranged together with the electric motor (42a) thereof such that the food (10) that can be cut by said cutting device falls into the first deep-frying region (24a) in the region of the first end wall (2d), whereas the further cutting device (40b) is arranged together with the electric motor (42b) thereof such that the food (10) that can be cut by said further cutting device falls into the second deep-frying region (24b) in the region of the first end wall (2d).

12. Continuous deep fryer (1) according to any of the preceding claims, **characterised by** the following features:
- the receiving chamber (43) can be at least partially closed by a cover means (48);
- the electric motor (42a) of the at least one cutting device (40a) can only be activated when the cover means (48) at least partially closes the receiving chamber (43).

13. Continuous deep fryer (1) according to any of the preceding claims, **characterised by** the following feature:
- the deep fryer comprises a control device (15) which is designed to control the speed of the drivers (6a, 6b) and the heating power of the heating device such that the food (10) reaches a defined state at the second end wall (2e).

14. Continuous deep fryer (1) according to any of the preceding claims, **characterised by** the following features:
- the deep fryer comprises a removal point (16), which is arranged on the second end wall (2e);
- the removal point (16) comprises an outlet for liquid fat or oil.

15. Continuous deep fryer (1) according to any of the preceding claims, **characterised by** the following features:
- the deep fryer comprises a plurality of rollers (11) which are mounted on the underside of a frame (12) of the continuous deep fryer (1) such that the continuous deep fryer (1) is movable;
- there are storage compartments (13) between the deep-frying vat (2) and the frame (12).

## Revendications

1. Dispositif de friture en continu (1) pour la friture d'aliments à frire (10), en particulier de chips de pommes de terre, présentant les éléments suivants :
- une cuve de friture (2) qui présente un fond de cuve (2a) et une paroi de cuve périphérique en formant une chambre de friture (3), la paroi de cuve périphérique comprenant au moins une première et une deuxième paroi latérale (2b, 2c) et une première et une deuxième paroi frontale (2d, 2e);
- au moins un dispositif de chauffage qui est réalisé pour chauffer l'huile ou la graisse à l'intérieur de la cuve de friture (2);
- la chambre de friture (3) de la cuve de friture (2) étant remplie ou pouvant être remplie d'huile ou de graisse jusqu'à un niveau de remplissage (9);
- une pluralité d'entraîneurs (6a, 6b), qui sont fixés à distance les uns des autres sur un dispositif de guidage (7);
- le dispositif de guidage (7) étant réalisé de manière à déplacer les entraîneurs (6a, 6b) dans une direction de révolution à travers la cuve de friture (2), dans lequel :
a) les entraîneurs (6a, 6b) plongent dans la cuve de friture (2) dans la zone de la première paroi frontale (2d) et sont mobiles dans la cuve de friture (2) sur une première trajectoire de déplacement (8a) au moins par portions depuis la première paroi frontale (2d) en direction de la deuxième paroi frontale (2e); et
b) les entraîneurs (6a, 6b) sont mobiles sur une deuxième trajectoire de déplacement (8b) au moins par portions à partir de la deuxième paroi frontale (2e) en direction de la première paroi frontale (2d) au-dessus du niveau de remplissage (9),
**caractérisé par** les éléments suivants :
- dans la zone de la première paroi frontale (2d), au moins un dispositif de coupe (40a) est disposé pour couper les aliments à frire (10), les aliments à frire (10) étant des pommes de terre;
- ledit au moins un dispositif de coupe (40a) comprend au moins une arête de coupe (41) et un moteur électrique (42a), le moteur électrique (42a) pouvant être déplacé par rapport à l'arête de coupe (41) en étant rapproché et éloigné de celle-ci, un espace de réception (43) étant formé entre l'arête de coupe (41) et le moteur électrique (42a), espace dans lequel les aliments à frire (10) à couper peuvent être introduits;
- le moteur électrique (42a) comprend au moins un moyen de fixation (44) qui est réalisé pour fixer les aliments à frire (10) avec couplage en rotation à l'arbre (41) du moteur électrique (42a), les aliments à frire (10) pouvant être découpés par un mouvement de rotation de l'arbre du moteur électrique (42a) et tombant dans la cuve de friture (2) dans la zone de la première paroi frontale (2d).

2. Dispositif de friture en continu (1) selon la revendication 1, **caractérisé par** les éléments suivants:
- la première trajectoire de déplacement (8a) s'étend parallèlement ou avec une composante majoritairement parallèle à la deuxième trajectoire de déplacement (8b); et/ou
- la première trajectoire de déplacement (8a) est de même longueur que la deuxième trajectoire de déplacement (8b), ou la première trajectoire de déplacement (8a) est plus longue que la deuxième trajectoire de déplacement (8b) de plus de 10% ou 20% ou 30% ou 50% ou de plus de 70%, mais de moins de 100% ou 80% ou 60% ou 40% ou de moins de 20%; et/ou
- les entraîneurs (6a, 6b) circulent dans la première trajectoire de déplacement (8a) majoritairement en dessous du niveau de remplissage (9) et dans la deuxième trajectoire de déplacement (8b) seulement au-dessus du niveau de remplissage (9).

3. Dispositif de friture en continu (1) selon l'une des revendications précédentes, **caractérisé par** l'élément suivant :
- la deuxième paroi frontale (2e) s'étend en oblique, en particulier à un angle de plus de 20° ou plus de 30° ou plus de 40° ou plus de 50° ou plus de 60° ou plus de 70° mais de moins de 80° ou moins de 70° ou moins de 60° ou moins de 50°, ou moins de 40° ou moins de 30° jusqu'au fond de cuve (2a).

4. Dispositif de friture en continu (1) selon l'une des revendications précédentes, **caractérisé par** l'élément suivant :
- l'entraîneur (6a, 6b) comporte une paroi arrière (20) qui s'étend au moins le long de la première trajectoire de déplacement (8a) perpendiculairement ou avec une composante majoritairement perpendiculaire au fond de cuve (2a) et à la première et/ou à la deuxième paroi latérale (2b, 2c) et plonge dans la chambre de friture (3) en dessous du niveau de remplissage (9);
- l'entraîneur (6a, 6b) comprend une première et une deuxième paroi latérale (21a, 21b) qui sont orientées parallèlement ou avec une composante majoritairement parallèle à la première et/ou à la deuxième paroi latérale (2b, 2c) de la cuve de friture (2);
- la première paroi latérale (21a) de l'entraîneur est disposée sur un premier côté de la paroi arrière (20) de l'entraîneur et la deuxième paroi latérale (21b) de l'entraîneur est disposée sur un deuxième côté de la paroi arrière (20) de l'entraîneur opposé au premier côté, moyennant quoi l'entraîneur (6a, 6b) est conçu en forme de U en vue de dessus;
- l'entraîneur (6a, 6b) est majoritairement ou complètement ouvert en direction du fond de cuve (2);
- dans le sens du mouvement de l'entraîneur (6a, 6b), les première et deuxième parois latérales (21a, 21b) de l'entraîneur sont disposées devant la paroi arrière (20) de l'entraîneur.

5. Dispositif de friture en continu (1) selon la revendication 4, **caractérisé par** les éléments suivants :
- la paroi arrière (20) de l'entraîneur et/ou les parois latérales (21a, 21b) de l'entraîneur sont traversées par des ouvertures;
- les ouvertures sont plus petites que les aliments à frire (10).

6. Dispositif de friture en continu (1) selon l'une des revendications précédentes, **caractérisé par** les éléments suivants :
- le dispositif de guidage (7) comprend un premier moyen d'entraînement en circulation (22a), qui est une chaîne d'entraînement ou une courroie d'entraînement,
- la pluralité d'entraîneurs (6a, 6b) sont fixés au premier moyen d'entraînement en circulation (22a);
- le premier moyen d'entraînement en circulation (22a) s'étend approximativement au milieu de la cuve de friture (2) le long d'un axe longitudinal (23) s'étendant le long de la cuve de friture (2), moyennant quoi la cuve de friture (2) est divisée en une première zone de friture (24a) et en une deuxième zone de friture (24b);
- une première pluralité d'entraîneurs (6a) sont fixés avec leurs premières parois latérales (21a) et/ou avec leurs parois arrière (20) au premier moyen d'entraînement (22a) de sorte que la première pluralité d'entraîneurs (6a) sont mobiles dans la première zone de friture (24a);
- une deuxième pluralité d'entraîneurs (6b) sont fixés avec leurs deuxièmes parois latérales (21b) et/ou avec leurs parois arrière (20) au premier moyen d'entraînement (22a), de sorte que la deuxième pluralité d'entraîneurs (6b) sont mobiles dans la deuxième zone de friture (24b).

7. Dispositif de friture en continu (1) selon la revendication 6, **caractérisé par** les éléments suivants :
- le dispositif de guidage comprend un deuxième et un troisième moyens d'entraînement en circulation (22b, 22c) disposés parallèlement l'un à l'autre, qui sont une chaîne d'entraînement ou une courroie d'entraînement;
- la première pluralité d'entraîneurs (6a) sont fixée au second moyen d'entraînement (22b) par leurs secondes parois latérales (21b) et/ou par leurs parois arrière (20);
- la deuxième pluralité d'entraîneurs (6b) sont fixés au troisième moyen d'entraînement (22c) par leurs premières parois latérales (21a) et/ou par leurs parois arrière (20).

8. Dispositif de friture en continu (1) selon la revendication 7, **caractérisé par** les éléments suivants :
- chaque moyen d'entraînement (22a, 22b, 22c) peut être entraîné par une roue d'entraînement (25a, 25b, 25c), une roue d'entraînement (25a, 25b, 25c) de chaque moyen d'entraînement (22a, 22b, 22c) étant disposée sur le même arbre d'entraînement (25) qu'une roue d'entraînement (25a, 25b, 25c) de chacun des autres moyens d'entraînement (22a, 22b, 22c), de sorte que les moyens d'entraînement (22a, 22b, 22c) sont couplés en rotation;
- le dispositif de guidage (7) comprend pour chaque moyen d'entraînement (22a, 22b, 22c) au moins une roue de circulation (26a₁, 26b₁, 26c₁, 26a₂, 26b₂, 26c₂), une roue de circulation (26a₁, 26b₁, 26c₁, 26a₂, 26b₂, 26c₂) de chaque moyen d'entraînement (22a, 22b, 22c) étant disposée sur le même arbre (27a, 27b) qu'une roue de circulation respective (26a₁, 26b₁, 26c₁, 26a₂, 26b₂, 26c₂) de l'autre moyen d'entraînement (22a, 22b, 22c).

9. Dispositif de friture en continu (1) selon l'une des revendications précédentes, **caractérisé par** les éléments suivants :
- le moteur électrique (42a) dudit au moins un dispositif de coupe (40a) est guidé sur une tige ou un rail (45), le poids propre du moteur électrique (42a) avec son arbre rotatif faisant que les aliments à frire (10) peuvent être coupés au niveau de ladite au moins une arête de coupe (41).

10. Dispositif de friture en continu (1) selon l'une des revendications précédentes, **caractérisé par** les éléments suivants :
- le moyen de fixation (44) comprend une pointe de fixation ou un cylindre de fixation ou un cylindre creux de fixation qui peut être enfiché dans les aliments à frire (10); et/ou
- dans la zone de ladite au moins une arête de coupe (41), ledit au moins un dispositif de coupe (40a) comprend une surface d'appui (46) et/ou un mandrin d'arrêt (47), les aliments à frire (10) pouvant être placés au moins partiellement sur la surface d'appui (46) et/ou pouvant être embrochés sur le mandrin d'arrêt (47).

11. Dispositif de friture en continu (1) selon l'une des revendications précédentes et la revendication 6, **caractérisé par** les éléments suivants :
- dans la zone de la première paroi frontale (2d), un autre dispositif de coupe (40b) est disposé pour couper les aliments à frire (10);
- ledit au moins un dispositif de coupe (40a) est disposé avec son moteur électrique (42a) de telle sorte que les aliments à frire (10) qu'il peut couper tombent dans la zone de la première paroi frontale (2d) dans la première zone de friture (24a), tandis que l'autre dispositif de coupe (40b) est disposé avec son moteur électrique (42b) de telle sorte que les aliments à frire (10) qu'il peut couper tombent dans la zone de la première paroi frontale (2d) dans la deuxième zone de friture (24b).

12. Dispositif de friture en continu (1) selon l'une des revendications précédentes, **caractérisé par** les éléments suivants :
- l'espace de réception (43) peut être fermé au moins partiellement par un moyen de recouvrement (48);
- le moteur électrique (42a) dudit au moins un dispositif de coupe (40a) ne peut être activé que lorsque le moyen de recouvrement (48) ferme au moins partiellement l'espace de réception (43).

13. Dispositif de friture en continu (1) selon l'une des revendications précédentes, **caractérisé par** l'élément suivant :
- comprenant un dispositif de commande (15) qui est réalisé pour régler la vitesse des entraîneurs (6a, 6b) et la puissance de chauffe du dispositif de chauffage de telle sorte que les aliments à frire (10) atteignent un état défini au niveau de la deuxième paroi frontale (2e).

14. Dispositif de friture en continu (1) selon l'une des revendications précédentes, **caractérisé par** les éléments suivants :
- comprenant un emplacement d'enlèvement (16) qui est disposé sur la deuxième paroi frontale (2e);
- l'emplacement d'enlèvement (16) comprend une évacuation pour la graisse liquide ou l'huile.

15. Dispositif de friture en continu (1) selon l'une des revendications précédentes, **caractérisé par** les éléments suivants :
- comprenant plusieurs galets (11) qui sont montés sur le côté inférieur d'un cadre (12) du dispositif de friture en continu (1), de telle sorte que le dispositif de friture en continu (1) est mobile en translation;
- des compartiments de stockage (13) se situent entre la cuve de friture (2) et le cadre (12).
